# EUROPEAN PATENT APPLICATION

(11) **EP 4 564 642 A1**
(43) Date of publication of application: **04.06.2025**
(21) Application number: 23846158.6
(22) Date of filing: 05.07.2023
(51) Int. Cl.: H02J 7/00, B60L 53/24, B60L 58/19

(54) **POWER CONVERSION DEVICE AND PROGRAM**

(30) Priority: 29.07.2022 JP 2022122116
(71) Applicant: DENSO CORPORATION, Kariya-city, Aichi 448-8661 (JP)
(72) Inventor: TAKASHIMA, Kaoru, Kariya- city, Aichi 4488661 (JP); TOYAMA, Keisuke, Kariya- city, Aichi 4488661 (JP); KAZAOKA, Ryoya, Kariya- city, Aichi 4488661 (JP); SASAMA, Yuta, Kariya- city, Aichi 4488661 (JP); KUBO, Shunichi, Kariya- city, Aichi 4488661 (JP)
(74) Representative: Kuhnen & Wacker Patent- und Rechtsanwaltsbüro PartG mbB
(86) International application number: PCT/JP2023/024890
(87) International publication number: WO 2024/024425

(57) **Abstract**

A power converter includes a high-potential electrical path (22H), a low-potential electrical path (22L), an inverter (20), a motor (10), an inter-storage switch (40), a bypass switch (50, 51), and a motor-side electrical path (25-28). The inverter has an upper-arm switch (SWH) and a lower-arm switch (SWL). The motor has an armature winding (11) electrically connected to a connection point between the upper-arm and the lower-arm switches via a conductive member (23). The inter-storage switch is located at an inter-storage electrical path (24) that electrically connects a negative terminal of a first power storage unit (31) to a negative terminal of a second power storage unit (32). The bypass switch establishes at least one of an electrical connection between the negative terminals of the first and second power storage units or the positive terminals of the first and second power storage units. The motor-side electrical path electrically connects the inter-storage electrical path to either the armature winding or the conductive member.

## Description

### CROSS REFERENCE TO RELATED APPLICATION

This application is based on Japanese Patent Application No. 2022-122116 filed on July 29, 2022, the disclosure of which is incorporated herein by reference.

### TECHNICAL FIELD

The present disclosure relates to a power converter and a program.

### BACKGROUND ART

Conventionally, as described in Patent Literature 1, an in-vehicle system including a motor, an inverter electrically connected to the armature winding of the motor, and first and second power storage units is known. This system includes a relay for switching the connection state of the first and second power storage units between a series connection state and a parallel connection state. This allows the first and second power storage units to be charged regardless of whether the external charger has a charging voltage of 400 V or 800 V. Additionally, when an external charger with a charging voltage of 400 V is used, the connection state of the first and second power storage units is set to a parallel connection state, allowing the system voltage to be lowered and the first and second power storage units to be charged.

### PRIOR ART LITERATURE

### PATENT LITERATURE

Patent Literature 1: Japanese Patent Publication No.6,930,306

### SUMMARY OF INVENTION

It is desired to simplify the configuration for switching the connection state of the first and second power storage units as much as possible.

The main objective of the present disclosure is to provide a power converter and a program that can achieve simplification of the configuration.

A power converter according to the present disclosure includes: a high-potential electrical path that can be electrically connected to a positive terminal of a first power storage unit; a low-potential electrical path that can be electrically connected to a negative terminal of a second power storage unit; an inverter having an upper-arm switch that is electrically connected to the high-potential electrical path, and a lower-arm switch that is electrically connected to the low-potential electrical path; a motor having an armature winding electrically connected to a connection point between the upper-arm switch and the lower-arm switch via a conductive member; an inter-storage switch located at an inter-storage electrical path that electrically connects a negative terminal of the first power storage unit to a positive terminal of the second power storage unit; a bypass switch that establishes at least one of an electrical connection between the negative terminal of the first power storage unit and the negative terminal of the second power storage unit, or an electrical connection between the positive terminal of the first power storage unit and the positive terminal of the second power storage unit; and a motor-side electrical path that electrically connects the inter-storage electrical path to either the armature winding or the conductive member.

In the present disclosure, when the inter-storage unit switch is turned on and the bypass switch is turned off, the connection state of the first and second power storage units becomes a series connection state. On the other hand, when the inter-storage unit switch is turned off and the bypass switch is turned on, and the motor-side electrical path is provided, the connection state of the first and second power storage units becomes such that the positive terminal of the second power storage unit is connected to the high-potential electrical path via the motor-side electrical path, armature winding, and inverter, or the negative terminal of the first power storage unit is connected to the low-potential electrical path via the motor-side electrical path, armature winding, and inverter. In this case, the configuration of the motor and inverter is reused. Therefore, it is possible to provide a power converter that achieves simplification of the configuration for switching the connection state of the first and second power storage units.

### BRIEF DESCRIPTION OF DRAWINGS

The above and other objects, features and advantages of the present disclosure will become more apparent from the following detailed description made with reference to the accompanying drawings. In the drawings:
FIG. 1 is an overall configuration diagram of a system according to a first embodiment;
FIG. 2 is a flowchart illustrating the procedure of a charging process;
FIG. 3 is a diagram illustrating the operation mode of switches during high-voltage charging;
FIG. 4 is a diagram illustrating the operation mode of the switches during low-voltage charging;
FIG. 5 is an overall configuration diagram of a system according to a second embodiment;
FIG. 6 is a flowchart illustrating the procedure of a charging process;
FIG. 7 is an overall configuration diagram of a system according to a third embodiment;
FIG. 8 is a flowchart illustrating the procedure of a charging process;
FIG. 9 is a diagram illustrating the operation mode of the switches during low-voltage charging;
FIG. 10 is a diagram illustrating the operation mode of the switches during low-voltage charging;
FIG. 11 is an overall configuration diagram of a system according to a fourth embodiment;
FIG. 12 is a flowchart illustrating the procedure of a charging process;
FIG. 13 is an overall configuration diagram of a system according to a fifth embodiment;
FIG. 14 is a flowchart illustrating the procedure of a charging process;
FIG. 15 is an overall configuration diagram of a system according to a sixth embodiment;
FIG. 16 is an overall configuration diagram of a system according to a modified example of the sixth embodiment;
FIG. 17 is an overall configuration diagram of a system according to a modified example of the sixth embodiment;
FIG. 18 is an overall configuration diagram of a system according to a modified example of the sixth embodiment;
FIG. 19 is an overall configuration diagram of a system according to a seventh embodiment;
FIG. 20 is a diagram illustrating the operation mode of the switches when pre-charging with a first battery;
FIG. 21 is a diagram illustrating the operation mode of the switches when pre-charging with a second battery;
FIG. 22 is an overall configuration diagram of a system according to an eighth embodiment;
FIG. 23 is a diagram illustrating the operation mode of the switches when pre-charging with the first battery;
FIG. 24 is an overall configuration diagram of a system according to a modified example of the seventh embodiment;
FIG. 25 is an overall configuration diagram of a system according to another embodiment;
FIG. 26 is an overall configuration diagram of a system according to another embodiment;
FIG. 27 is an overall configuration diagram of a thermal management system according to an embodiment;
FIG. 28 is an overall configuration diagram of a system according to another embodiment;
FIG. 29 is an overall configuration diagram of a system according to another embodiment;
FIG. 30 is an overall configuration diagram of a system according to another embodiment;
FIG. 31 is an overall configuration diagram of a thermal management system according to an embodiment;
FIG. 32 is an overall configuration diagram of a system according to another embodiment;
FIG. 33 is an overall configuration diagram of a system according to another embodiment;
FIG. 34 is an overall configuration diagram of a system according to another embodiment;
FIG. 35 is an overall configuration diagram of a thermal management system according to an embodiment;
FIG. 36 is an overall configuration diagram of a system according to another embodiment;
FIG. 37 is an overall configuration diagram of a system according to another embodiment;
FIG. 38 is an overall configuration diagram of a system according to another embodiment;
FIG. 39 is a diagram illustrating the operation mode of the switches during low-voltage charging in the configuration of FIG. 38;
FIG. 40 is an overall configuration diagram of a system according to another embodiment; and
FIG. 41 is an overall configuration diagram of a system according to another embodiment.

### EMBODIMENTS FOR CARRYING OUT THE INVENTION

Multiple embodiments will be described with reference to the drawings. In some embodiments, parts that are functionally and/or structurally corresponding to each other and/or associated with each other are given the same reference numerals, or reference numerals with different hundred digit or more digits. The corresponding and/or associated parts may refer to the explanation in the other embodiments.

### (First Embodiment)

The following describes a power converter according to a first embodiment of the present disclosure with reference to the drawings. The power converter according to the present embodiment is mounted on vehicles such as electric cars and hybrid vehicles, and constitutes an in-vehicle system.

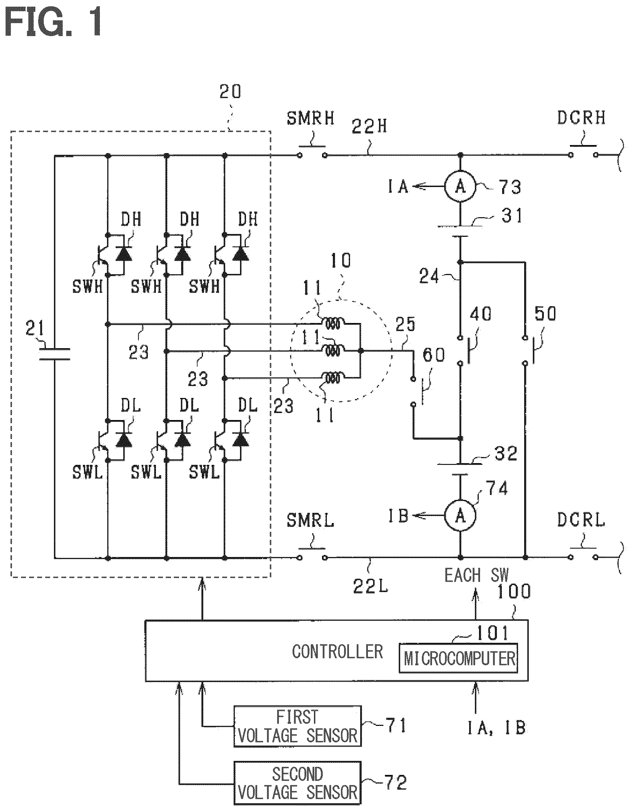

The system includes a power converter. The power converter, as shown in FIG. 1, includes a motor 10, an inverter 20, a high-potential electrical path 22H, and a low-potential electrical path 22L. The motor 10 is a three-phase synchronous machine and includes a star-connected U, V, W phase armature winding 11 and a rotor (not shown). The armature windings 11 for respective phases are arranged at an electrical angle of 120°. The motor 10 is, for example, a permanent magnet synchronous machine. The rotor can transfer power to the vehicle's driving wheels. Thus, the motor 10 is a source of torque for driving the vehicle.

The inverter 20 includes three sets of series-connected upper-arm switches SWH and lower-arm switches SWL. The upper-arm switch SWH is connected in anti-parallel with an upper-arm diode DH, which is a freewheeling diode, and the lower-arm switch SWL is connected in anti-parallel with a lower-arm diode DL, which is a freewheeling diode. In the present embodiment, each switch SWH and SWL is an IGBT.

The inverter 20 has a smoothing capacitor 21. A first end of the elongated high-potential electrical path 22H is connected to the high-potential terminal of the smoothing capacitor 21. A first end of the elongated low-potential electrical path 22L is connected to the low-potential terminal of the smoothing capacitor 21. The smoothing capacitor 21 may be provided outside the inverter 20.

In each phase, the first end of the armature winding 11 is connected to the connection point between the emitter of the upper-arm switch SWH, which is the low-potential terminal, and the collector of the lower-arm switch SWL, which is the high-potential terminal, via a conductive member such as a bus bar 23. The second ends of the armature windings 11 of each phase are connected at a neutral point. In this embodiment, the armature windings 11 of each phase are set to have the same number of turns. As a result, the armature windings 11 of each phase, for example, are set to have the same inductance.

The collector of the upper-arm switch SWH of each phase is connected to the high-potential electrical path 22H. The emitter of the lower-arm switch SWL of each phase is connected to the low-potential electrical path 22L.

The system includes a first storage battery 31 (corresponding to a first power storage unit) and a second storage battery 32 (corresponding to a second power storage unit). Each of the storage batteries 31 and 32 serves as a power supply source for driving the rotation of the rotor of the motor 10. Each of the storage batteries 31 and 32 is an assembled battery configured as a series connection of battery cells, each being a single cell. The positive terminal of the first storage battery 31 is connected to the high-potential electric path 22H, and the negative terminal of the second storage battery 32 is connected to the low-potential electric path 22L. The terminal voltages (for example, rated voltages) of each battery cell constituting a battery pack are set to be the same as each other, for example. The battery cell 2 is, for example, a secondary battery such as a lithium ion battery.

Each storage battery 31, 32 can be charged by an external charger as described later provided outside the vehicle. The external charger is, for example, a stationary charger. On the second end side of the high-potential electrical path 22H, opposite to the connection point side of the smoothing capacitor 21, a positive side connection part is provided, to which the positive terminal of the external charger can be connected. On the second end side of the low-potential electrical path 22L, opposite to the connection point side of the smoothing capacitor 21, a negative side connection part is provided, to which the negative terminal of the external charger can be connected.

The power converter is equipped with a main switch for electrically connecting or disconnecting the first and second storage batteries 31 and 32 to or from the inverter 20. Specifically, as the main switch, a high-potential main switch SMRH and a low-potential main switch SMRL are provided. The power converter is equipped with a charging switch for electrically connecting or disconnecting the external charger and the first and second storage batteries 31 and 32. Specifically, as the charging switch, a high-potential charging switch DCRH and a low-potential charging switch DCRL are provided. In the present embodiment, each of the switches SMRH, SMRL, DCRH, and DCRL is a mechanical relay. Each of the switches SMRH, SMRL, DCRH, and DCRL prevents the flow of bidirectional current when turned off and allows the flow of bidirectional current when turned on. In the high-potential electrical path 22H, a high-potential main switch SMRH and a high-potential charging switch DCRH are provided in sequence from the inverter 20 side. In the low-potential electrical path 22L, a low-potential main switch SMRL and a low-potential charging switch DCRL are provided in sequence from the inverter 20 side. The high-potential main switch SMRH, low-potential main switch SMRL, high-potential charging switch DCRH, and low-potential charging switch DCRL are not limited to mechanical relays and may, for example, be semiconductor switching elements.

The power converter includes an inter-battery switch 40, a bypass switch 50, and a motor-side switch 60 as switches for switching the connection state of the first battery 31 and the second battery 32 between a state in which they are connected in series to an external charger and a state in which they are connected via a motor. In this embodiment, the inter-battery switch 40, the bypass switch 50, and the motor-side switch 60 are mechanical relays. The inter-battery switch 40, the bypass switch 50, and the motor-side switch 60 prevent the flow of bidirectional current when turned off and allow the flow of bidirectional current when turned on. The inter-battery switch 40, the bypass switch 50, and the motor-side switch 60 are not limited to mechanical relays and may, for example, be semiconductor switching elements.

The inter-battery switch 40 is provided in the inter-battery electrical path 24 (corresponding to an inter-storage unit electrical path) that connects the negative terminal of the first battery 31 and the positive terminal of the second battery 32. By turning on the inter-battery switch 40, the negative terminal of the first battery 31 and the positive terminal of the second battery 32 are electrically connected. On the other hand, by turning off the inter-battery switch 40, the negative terminal of the first battery 31 and the positive terminal of the second battery 32 are electrically disconnected.

The bypass switch 50 connects the negative terminal of the first battery 31 to the low-potential electrical path 22L. By turning on the bypass switch 50, the negative terminal of the first battery 31 and the negative terminal of the second battery 32 are electrically connected. On the other hand, by turning off the bypass switch 50, the negative terminal of the first battery 31 and the negative terminal of the second battery 32 are electrically disconnected.

The motor-side switch 60 is provided in the motor-side electrical path 25, which connects the side of the inter-battery electrical path 24 closer to the second battery 32 than the inter-battery switch 40 to the neutral point of the armature winding 11. By turning on the motor-side switch 60, the neutral point of the armature winding 11 and the positive terminal of the second battery 32 are electrically connected. On the other hand, by turning off the motor-side switch 60, the neutral point of the armature winding 11 and the positive terminal of the second battery 32 are electrically disconnected.

The power converter is equipped with a first voltage sensor 71 that detects the terminal voltage of the first battery 31 and a second voltage sensor 72 that detects the terminal voltage of the second battery 32. The power converter is equipped with a first current sensor 73 that detects the current flowing through the first battery 31 and a second current sensor 74 that detects the current flowing through the second battery 32. The first current sensor 73 is provided in the electrical path that connects the positive terminal of the first battery 31 to the high-potential electrical path 22H. The second current sensor 74 is provided in the electrical path that connects the negative terminal of the second battery 32 to the low-potential electrical path 22L. The power converter is also equipped with other sensors, including a rotational angle sensor that detects the rotational angle (electrical angle) of the rotor, and phase current sensors that detect the phase currents flowing through the armature windings 11 of each phase.

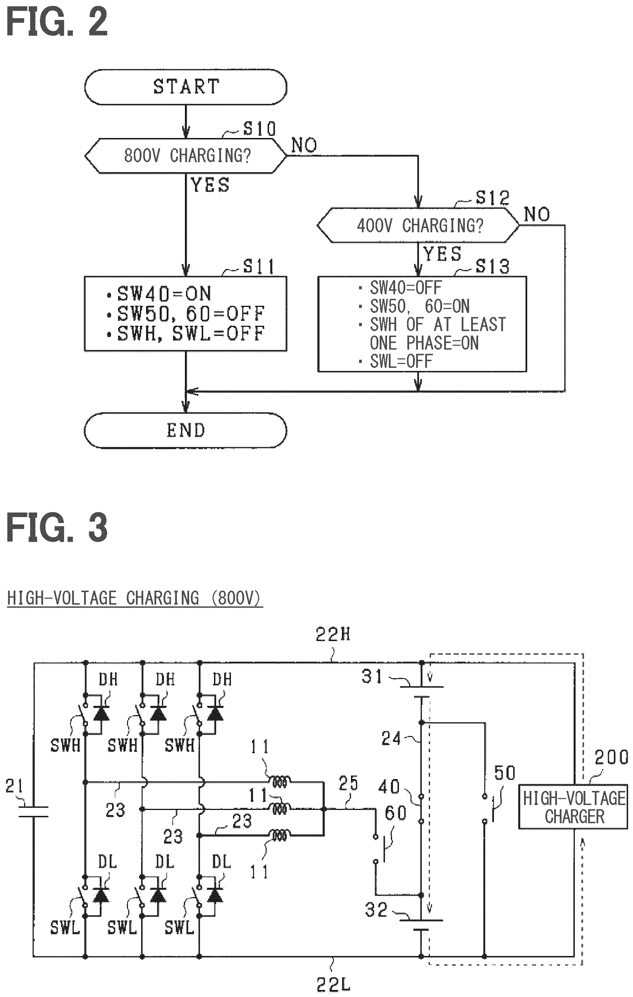

The detected values from each sensor are provided to a controller 100 (corresponding to a control unit) provided in the power converter. The controller 100 is primarily composed of a microcomputer 101, which includes a CPU. Means and/or functions provided by the microcomputer 101 may be provided by software recorded in a substantive memory device and a computer that can execute the software, software only, hardware only, or some combination of them. For instance, suppose that the microcomputer 101 be provided by including or using a hardware circuit serving as an electronic circuit. Such an electronic circuit may be provided by including analog circuitry and/or digital circuitry including multiple logic circuits. For example, the microcomputer 101 executes a program stored in a non-transitory tangible storage medium serving as a storage unit included therein. The program includes, for example, a program of processing shown in FIG 2 and the like described later. With the execution of the program, a method corresponding to the program is executed. The storage unit is, for example, a non-volatile memory. The programs stored in the memory unit can be updated, for example, over the air (OTA) or via communication networks such as the internet.

The controller 100 performs switching control of each switch SWH and SWL that constitute the inverter 20 in order to feedback control the control amount of the motor 10 to the command value based on the detected values from each sensor. The control amount is, for example, torque. In each phase, the upper-arm switch SWH and the lower-arm switch SWL are alternately turned on. Through this feedback control, the rotational power of the rotor is transmitted to the drive wheels, enabling the vehicle to move.

The positive-side connection part of the high-potential electrical path 22H and the negative-side connection part of the low-potential electrical path 22L serve as interfaces for connecting to an external charger. In this embodiment, the external charger is either a high-voltage charger 200 or a low-voltage charger 210 (see FIG. 3). The charging voltage of the high-voltage charger 200 is approximately equal to the terminal voltage (specifically, the rated voltage) of the series connection of the first and second batteries 31 and 32, which is, for example, 800 V. The charging voltage of the low-voltage charger 210 is lower than the rated voltage of the series connection of the first and second batteries 31 and 32, and is, for example, 400 V. For example, when an external charger is connected to each connection part by a user or operator and the first and second batteries 31 and 32 are being charged by the external charger, the high-potential-side charging switch DCRH and the low-potential-side charging switch DCRL are switched on by the controller 100.

On the other hand, when charging by the external charger is not being conducted or the external charger is not connected, the high-potential-side charging switch DCRH and the low-potential-side charging switch DCRL are switched off by the controller 100. When the positive terminal connection part and the negative terminal connection part are exposed outside the casing of the power conversion device, there is a possibility that a user or operator might come into contact with them. By turning off the high-potential-side charging switch DCRH and the low-potential-side charging switch DCRL, the occurrence of electric shock can be prevented.

Next, using FIG. 2, the charging process with the external charger will be explained. This process is executed by the controller 100.

In step S10, it is determined whether the external charger connected to each connection point of the respective electrical paths 22H and 22L is a high-voltage charger 200 or not. This process is for determining whether to connect the first and second batteries 31 and 32 in series connection.

In step S10, if it is determined that the external charger is a high-voltage charger 200, the process proceeds to step S11, where the inter-battery switch 40, bypass switch 50, motor-side switch 60, and the upper and lower-arm switches SWH and SWL of the inverter 20 are operated so that the first battery 31 and the second battery 32 are connected in series to the high-voltage charger 200.

Specifically, the inter-battery switch 40 is turned on, and the bypass switch 50, motor-side switch 60, and the upper and lower-arm switches SWH and SWL of all phases of the inverter 20 are turned off. As a result, as shown in FIG. 3, the first battery 31 and the second battery 32 are connected in series to the high-voltage charger 200. As a result, a closed circuit including the high-voltage charger 200, high-potential electrical path 22H, first battery 31, inter-battery switch 40, second battery 32, and low-potential electrical path 22L allows current to flow, charging the first battery 31 and the second battery 32 in a series connection. At this time, since the upper-arm switch SWH of the inverter 20 and the motor-side switch 60 are turned off, it is possible to prevent the charging current of the high-voltage charger 200 from flowing into the inverter 20 and the armature winding 11. In FIG. 3, the illustration of each main switch SMRH, SMRL, and each charging switch DCRH, DCRL is omitted.

Returning to the explanation of FIG. 2, if it is determined in step S10 that the external charger is not the high-voltage charger 200, the process proceeds to step S12 to determine whether the connected external charger is the low-voltage charger 210. This process is for determining whether to set the connection state of the first and second batteries 31 and 32 to the state where they are connected via the motor.

If it is determined in step S12 that the external charger is the low-voltage charger 210, the process proceeds to step S13, where the inter-battery switch 40, bypass switch 50, motor-side switch 60, and the upper and lower-arm switches SWH and SWL of the inverter 20 are operated so that the connection state of the first and second batteries 31 and 32 becomes the state where they are connected via the motor. This allows the system voltage to be reduced to a voltage equivalent to the charging voltage of the low-voltage charger 210, thereby enabling ground fault countermeasures to be implemented during charging with the low-voltage charger 210.

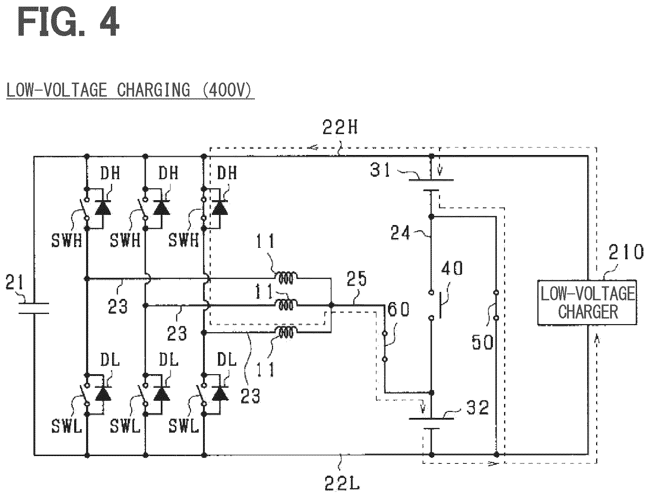

Specifically, the inter-battery switch 40 is turned off, and the bypass switch 50 and motor-side switch 60 are turned on. All lower-arm switches SWL of the inverter 20 are turned off, and at least one upper-arm switch SWH is turned on. This causes the first battery 31 and the second battery 32 to be in a state of being connected via the motor to the low-voltage charger 210, as shown in FIG. 4. Therefore, current flows in a closed circuit that includes the low-voltage charger 210, the high-potential electrical path 22H, the first battery 31, the bypass switch 50, and the low-potential electrical path 22L, and the first battery 31 is charged. Current flows in a closed circuit that includes the low-voltage charger 210, the high-potential electrical path 22H, the upper-arm switch SWH, the armature winding 11, the neutral point, the motor-side switch 60, the second battery 32, and the low-potential electrical path 22L, and the second battery 32 is charged. In step S13, when the upper-arm switches SWH of multiple phases are turned on, the impedance of the charging path can be reduced.

Through the processing in step S13, the connection states of the first and second batteries 31 and 32 can be set to a state of being connected via the motor. This allows the first battery 31 to be directly charged by the low-voltage charger 210, and the second battery 32 to be charged via the inverter 20 and the armature winding 11. Even if the rated voltages of the first and second batteries 31 and 32 are different, or if the actual terminal voltages of the first and second batteries 31 and 32 with the same rated voltage are different, the first and second batteries 31 and 32 can be simultaneously charged without an additional power conversion circuit.

According to the embodiment described in detail above, the configuration that lowers the system voltage in response to the charging voltage of the low-voltage charger 210 can be realized by reusing part of the configuration of the inverter 20 and the motor 10. Therefore, it is possible to provide a power conversion device that simplifies the configuration for switching the connection states of the first and second batteries 31 and 32.

### (Modified Example of First Embodiment)

In step S11 of FIG. 2, on the condition that the in-phase upper and lower-arm switches SWH and SWL of the inverter 20 are not turned on, at least one phase of the upper-arm switch SWH and the motor-side switch 60 may be turned on. In step S11, switching may be performed by repeatedly turning on and off either one of the in-phase upper and lower-arm switches SWH and SWL, or switching may be performed by alternately turning on the in-phase upper and lower-arm switches SWH and SWL.

In step S13, it is not limited to maintaining the upper-arm switch SWH in the on state; switching may be performed by repeatedly turning it on and off, or switching may be performed by alternately turning on the upper and lower-arm switches SWH and SWL in at least one phase. In this case, for example, switching may be performed so that the torque of the motor 10 becomes zero or a value near zero (specifically, for example, the q-axis current flowing through the armature winding 11 becomes zero or a value near zero) based on the detected value of the electrical angle.

After affirming in step S12, if it is determined that the terminal voltage of the first battery 31 (hereinafter referred to as the first detected voltage VA) detected by the first voltage sensor 71 is equal to or greater than the terminal voltage of the second battery 32 (hereinafter referred to as the second detected voltage VB) detected by the second voltage sensor 72, the process of step S13 may be performed. After affirming in step S12, if the second detected voltage VB is higher than the first detected voltage VA, and the value obtained by subtracting the first detected voltage VA from the second detected voltage VB exceeds a threshold value ΔVjde (>0). if it is determined that the value is less than or equal to a second threshold value ΔVjde2 (described later), the process of step S13 may be performed. This ensures that, in the case where the operating states of the switches are switched as in step S13, the occurrence of the phenomenon where current flows from the second battery 32 to the first battery 31 via the motor-side electrical path 25, the armature winding 11, the upper-arm diode DH, and the high-potential electrical path 22H can be suppressed. Even if this phenomenon does occur, the amount of current flowing in can be reduced.

The threshold value ΔVjde is smaller than the rated voltages of each of the batteries 31 and 32. The threshold value ΔVjde is set, for example, to a value that is 1/10 or less, 1/20 or less, 1/50 or less, or 1/100 or less of the lower of the rated voltages of the batteries 31 and 32. A situation where the second detected voltage VB and the first detected voltage VA differ significantly can occur, for example, in the following cases (1) to (3).
(1) When the number of battery cells constituting the first battery 31 and the number of battery cells constituting the second battery 32 differ, even though the battery cells of each battery 31 and 32 have the same rated voltage.
(2) When the number of battery cells constituting each of the batteries 31 and 32 is the same, but the types of the batteries 31 and 32 differ, resulting in different rated voltages for the battery cells of each battery 31 and 32.
(3) When the number of battery cells constituting each of the batteries 31 and 32 differs, and the types of the batteries 31 and 32 also differ, resulting in different rated voltages for the battery cells of each battery 31 and 32.

### (Second Embodiment)

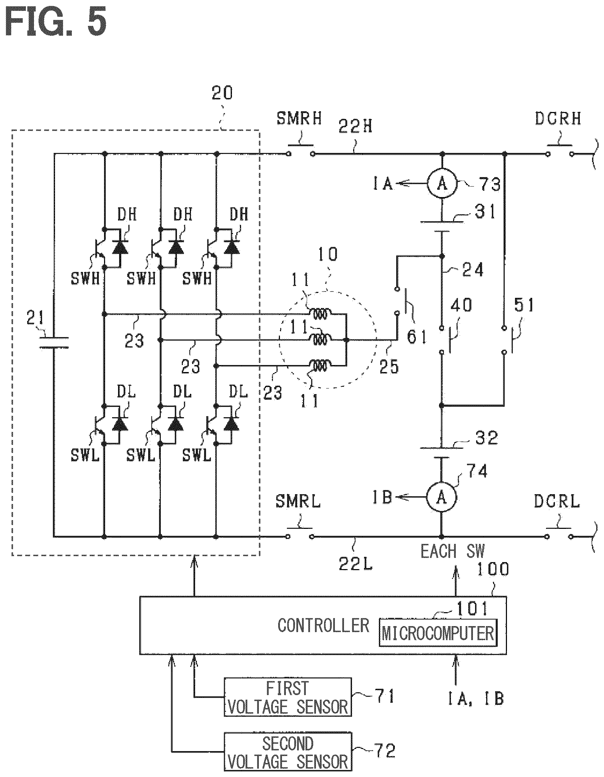

A second embodiment will be described below with reference to the drawings mainly in terms of differences from the first embodiment. In this embodiment, as shown in FIG. 5, the bypass switch 51 connects the positive terminal of the second battery 32 to the high-potential electrical path 22H. The motor-side switch 61 connects the negative terminal of the first battery 31 to the neutral point of the armature winding 11.

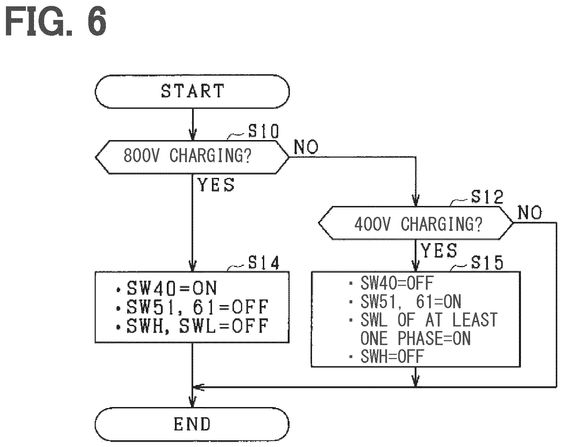

FIG. 6 shows the procedure of the charging control process executed by the controller 100 in this embodiment.

If it is determined in step S10 that the external charger is a high-voltage charger 200, the process proceeds to step S14. In step S14, the inter-battery switch 40 is turned on, and the bypass switch 51, the motor-side switch 61, and all phase upper and lower-arm switches SWH and SWL of the inverter 20 are turned off, so that the first battery 31 and the second battery 32 are connected in series to the high-voltage charger 200. As a result, the first battery 31 and the second battery 32 are connected in series to the high-voltage charger 200, and they are charged in a series-connected state.

If it is determined in step S12 that the external charger is a low-voltage charger 210, the process proceeds to step S15. In step S15, the inter-battery switch 40 is turned off, the bypass switch 51 and the motor-side switch 61 are turned on, the lower-arm switches SWL of all phases of the inverter 20 are turned off, and the upper-arm switch SWH of at least one phase is turned on, so that the connection state of the first battery 31 and the second battery 32 becomes a motor-connected state with respect to the low-voltage charger 210. As a result, the connection state of the first battery 31 and the second battery 32 becomes a motor-connected state with respect to the low-voltage charger 210, and the first battery 31 and the second battery 32 are charged.

### (Modified Example of Second Embodiment)

In step S14 of FIG. 6, on the condition that the upper and lower-arm switches SWH and SWL of the same phase of the inverter 20 are not turned on, it is possible to turn on at least one phase's lower-arm switch SWL and the motor-side switch 61. In step S14, it is possible to perform switching by repeatedly turning on and off either the upper or lower-arm switch SWH or SWL of the same phase, or by alternately turning on the upper and lower-arm switches SWH and SWL of the same phase.

In step S15, it is not limited to maintaining the lower-arm switch SWL in the on state; switching by repeatedly turning it on and off may also be performed, or switching by alternately turning on the upper and lower-arm switches SWH and SWL in at least one phase may also be performed.

After affirming in step S12, if it is determined that the second detected voltage VB is equal to or greater than the first detected voltage VA, the processing of step S15 may be performed. After affirming in step S12, if it is determined that the first detected voltage VA is higher than the second detected voltage VB, and the value obtained by subtracting the second detected voltage VB from the first detected voltage VA is equal to or less than the threshold ΔVjde, the processing of step S15 may be performed.

### (Third Embodiment)

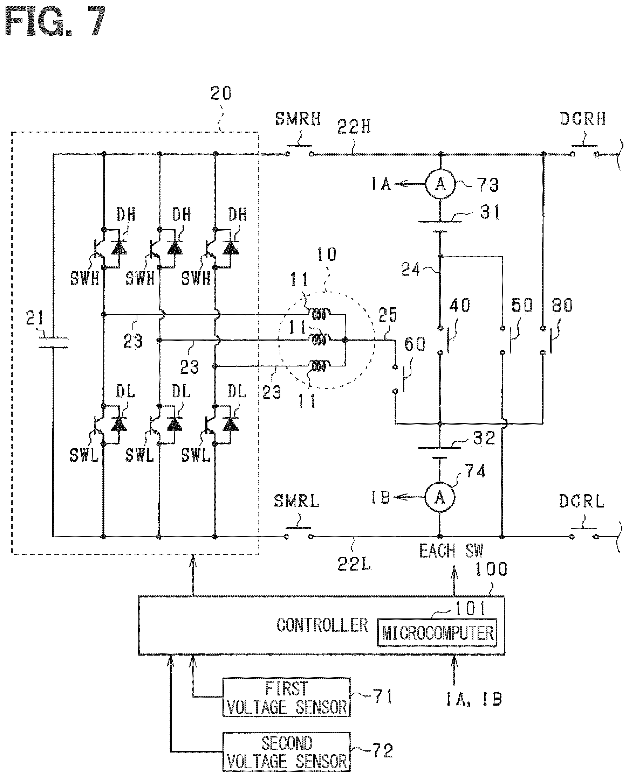

A third embodiment will be described below with reference to the drawings mainly in terms of differences from the first embodiment. In the present embodiment, as shown in FIG. 7, a bypass switch 80 that connects the positive terminal of the second battery 32 and the high-potential electrical path 22H is further provided. In the present embodiment, the bypass switch 80 will be referred to as the second bypass switch 80, and the bypass switch 50 will be referred to as the first bypass switch 50.

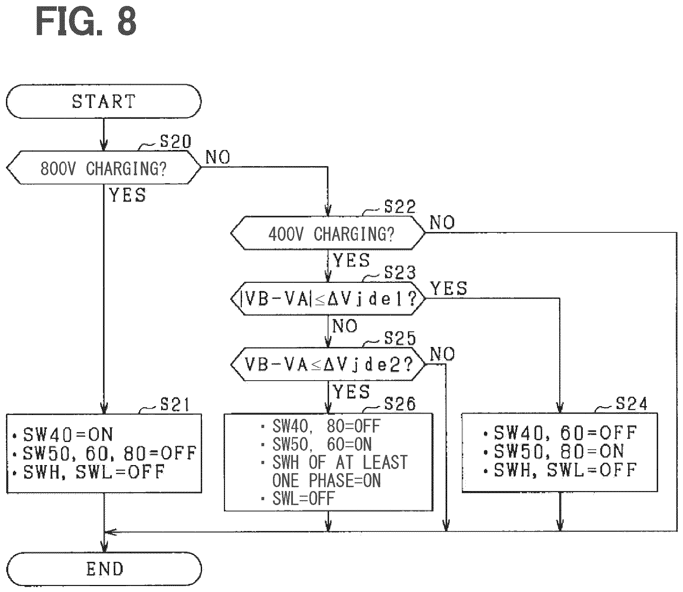

FIG. 8 illustrates the procedure of the charging control process of the present embodiment executed by the controller 100.

In step S20, similar to step S10, it is determined whether the external charger is a high voltage charger 200.

If it is determined in step S20 that the external charger is the high-voltage charger 200, the process proceeds to step S21, where the inter-battery switch 40, the first bypass switch 50, the second bypass switch 80, the motor-side switch 60, and the upper and lower-arm switches SWH and SWL of the inverter 20 are operated so that the first battery 31 and the second battery 32 are connected in series to the high-voltage charger 200.

Specifically, the inter-battery switch 40 is turned on, and the first bypass switch 50, the second bypass switch 80, the motor-side switch 60, and the upper and lower-arm switches SWH and SWL of all phases of the inverter 20 are turned off. As a result, the first battery 31 and the second battery 32 are charged in series while being connected in series to the high-voltage charger 200.

If it is determined in step S20 that the external charger is not the high-voltage charger 200, the process proceeds to step S22, where it is determined, similar to step S12, whether the external charger is the low-voltage charger 210.

If it is determined in step S22 that the external charger is the low-voltage charger 210, the process proceeds to step S23, where it is determined whether the absolute value of the difference between the first detected voltage VA and the second detected voltage VB is less than or equal to the first threshold ΔVjde1(>0).

If it is determined in step S23 that the absolute value of the difference is less than or equal to the first threshold ΔVjde1, the process proceeds to step S24, where the inter-battery switch 40, the first bypass switch 50, the second bypass switch 80, the motor-side switch 60, and the upper and lower-arm switches SWH and SWL of the inverter 20 are operated so that the first battery 31 and the second battery 32 are each connected in parallel to the low-voltage charger 210.

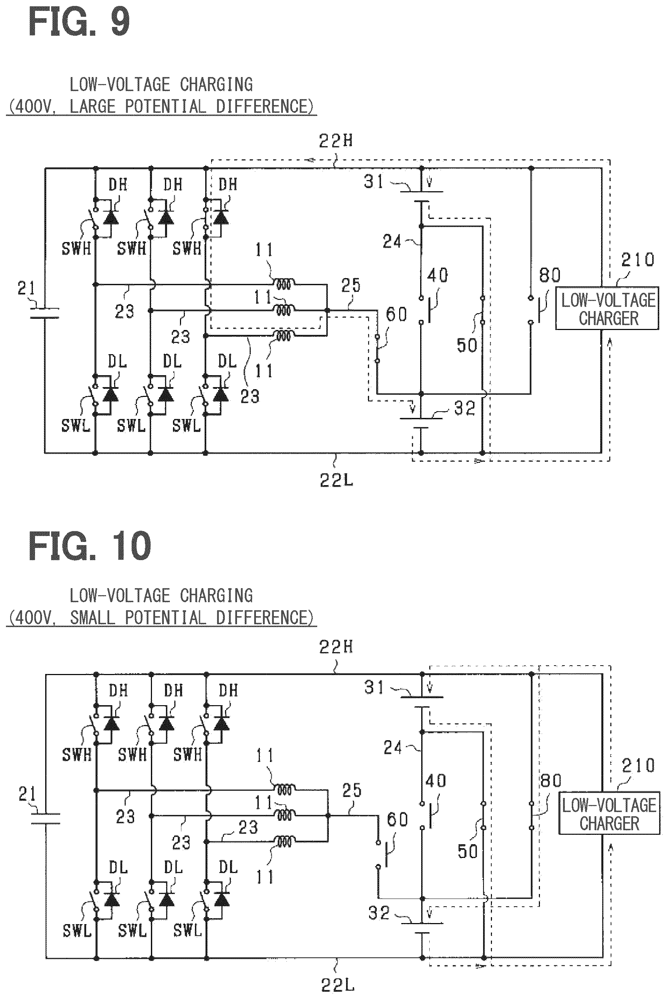

Specifically, the inter-battery switch 40 and the motor-side switch 60 are turned off, and the first bypass switch 50 and the second bypass switch 80 are turned on. The upper and lower-arm switches SWH and SWL of all phases of the inverter 20 are turned off. As a result, as shown in FIG. 10, the first battery 31 and the second battery 32 are each connected in parallel to the low-voltage charger 210. Therefore, current flows through a closed circuit that includes the low-voltage charger 210, the high-potential electrical path 22H, the first battery 31, the first bypass switch 50, and the low-potential electrical path 22L, and the first battery 31 is charged. Current also flows through a closed circuit that includes the low-voltage charger 210, the high-potential electrical path 22H, the second bypass switch 80, the second battery 32, and the low-potential electrical path 22L, and the second battery 32 is charged. At this time, because the potential difference between the first and second batteries 31 and 32 is small, the occurrence of a phenomenon where current flows from one of the batteries to the other can be suppressed, or even if this phenomenon occurs, the amount of current flowing can be minimized.

Returning to the explanation of Figure 8, if it is determined in step S23 that the absolute value of the difference exceeds the first threshold value ΔVjde1, the process proceeds to step S25. In step S25, it is determined whether the value obtained by subtracting the first detected voltage VA from the second detected voltage VB is greater than the first threshold value ΔVjde1 but less than or equal to the second threshold value ΔVjde2 (>0). In step S25, if it is determined that "VB-VA > ΔVjde2", charging by the low-voltage charger 210 in both the motor-connected state and the parallel-connected state of the first and second batteries 31 and 32 is prohibited. The situation in which it is determined in step S25 that "VB-VA > ΔVjde2" is one where the second detected voltage VB is higher than the first detected voltage VA, and the potential difference between the second detected voltage VB and the first detected voltage VA exceeds the second threshold value ΔVjde2. The first threshold value ΔVjde1 is set, for example, based on the potential difference between the first and second batteries 31 and 32 in a parallel-connected state. Specifically, it may be set such that the potential difference between the first battery 31 and the second battery 32 results in a maximum inrush current and a steady-state current, determined by the relationship between the impedance of the current path existing between the first battery 31 and the second battery 32 (specifically, for example, the impedance of the first and second batteries 31 and 32) and the potential difference between the first battery 31 and the second battery 32, that are below tolerance values. The second threshold value ΔVjde2 is set, for example, based on the potential difference between the first and second batteries 31 and 32 when they are in a motor-connected state. Specifically, it may be set such that the potential difference between the first battery 31 and the second battery 32 results in a maximum inrush current and a steady-state current, determined by the relationship between the impedance of the current path existing between the first battery 31 and the second battery 32 (which includes, for example, the impedance of the first and second batteries 31 and 32, the impedance of the inverter 20 and the armature winding 11, and the forward impedance of the diodes in the inverter 20) and the potential difference between the first battery 31 and the second battery 32, that are below tolerance values. Here, the tolerance value is, for example, the maximum current that a component on a current path can safely withstand.

On the other hand, if it is determined in step S25 that "VB-VA ≤ ΔVjde2", the process proceeds to step S26. The situation in which it is determined in step S25 that "VB-VA ≤ ΔVjde2" is one where either the first detected voltage VA is higher than the second detected voltage VB and the potential difference between the second detected voltage VB and the first detected voltage VA exceeds the first threshold value ΔVjde1, or the second detected voltage VB is higher than the first detected voltage VA and the potential difference between the second detected voltage VB and the first detected voltage VA is greater than the first threshold value ΔVjde1 but not exceeding the second threshold value ΔVjde2. In step S26, the connection state of the first battery 31 and the second battery 32 is set to a motor-connected state by operating the inter-battery switch 40, the first bypass switch 50, the second bypass switch 80, the motor-side switch 60, and the upper and lower-arm switches SWH and SWL of the inverter 20.

Specifically, in step S26, the inter-battery switch 40 and the second bypass switch 80 are turned off, while the first bypass switch 50 and the motor-side switch 60 are turned on. In addition, the lower-arm switch SWL of each phase of the inverter 20 us turned off, and the upper-arm switch SWH of at least one phase is turned on. As a result, as shown in FIG. 9, the connection state of the first battery 31 and the second battery 32 becomes a motor-connected state. Therefore, a closed circuit including the low-voltage charger 210, the high-potential electrical path 22H, the first battery 31, the first bypass switch 50, and the low-potential electrical path 22L allows current to flow, thereby charging the first battery 31. Current flows in a closed circuit that includes the low-voltage charger 210, the high-potential electrical path 22H, the upper-arm switch SWH, the armature winding 11, the neutral point, the motor-side switch 60, the second battery 32, and the low-potential electrical path 22L, and the second battery 32 is charged. At this time, it is possible to suppress the occurrence of a phenomenon where current flows from the second battery 32 to the first battery 31 via the motor-side electrical path 25, the armature winding 11 upper-arm diode DH, and the high-potential electrical path 22H, or to reduce the amount of current flowing in if this phenomenon does occur.

### (Modified Example of Third Embodiment)

The process of step S25 in FIG. 8 can be omitted, and the process of step S26 can be carried out if the decision in step S23 is affirmative. In step S26, it is not limited to maintaining the upper-arm switch SWH in the on state; switching that repeatedly turns the switch on and off may also be performed. Additionally, switching that alternately turns the upper and lower-arm switches SWH and SWL on in at least one phase may also be performed.

### (Fourth Embodiment)

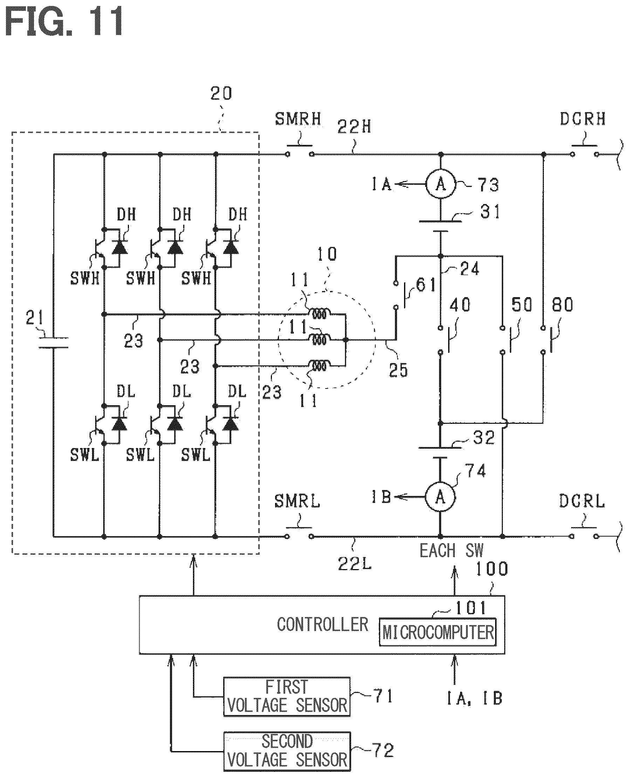

Hereinafter, the fourth embodiment will be described with reference to the drawings, focusing on the differences from the third embodiment. In this embodiment, as shown in FIG. 11, the motor-side electrical path 25, in which a motor-side switch 61 is provided, connects the neutral point of the armature winding 11 and the side of the inter-battery electrical path 24 that is closer to the first battery 31 than the inter-battery switch 40.

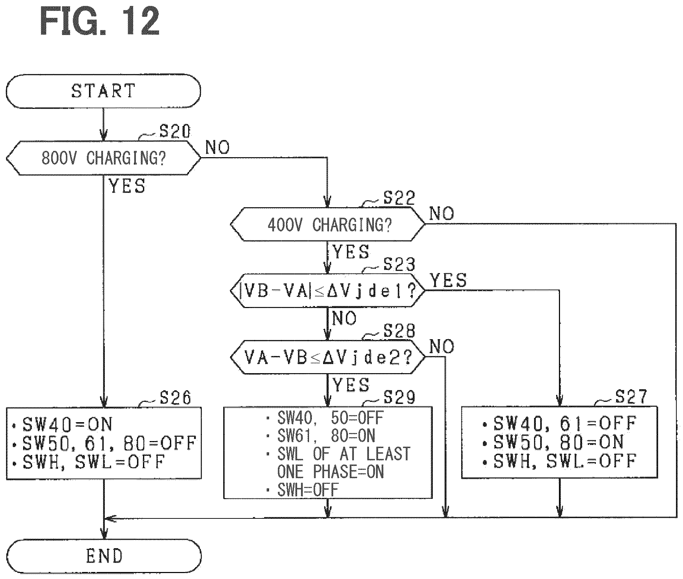

FIG. 12 illustrates the procedure of the charging control process of the present embodiment executed by the controller 100.

If it is determined in step S20 that the external charger is the high-voltage charger 200, the process proceeds to step S26, where the inter-battery switch 40, the first bypass switch 50, the second bypass switch 80, the motor-side switch 61, and the upper and lower-arm switches SWH and SWL of the inverter 20 are operated so that the first battery 31 and the second battery 32 are connected in series to the high-voltage charger 200.

Specifically, the inter-battery switch 40 is turned on, and the upper and lower-arm switches SWH and SWL of all phases of the first bypass switch 50, the second bypass switch 80, the motor-side switch 61, and the inverter 20 are turned off. As a result, the first battery 31 and the second battery 32 are charged in a state where they are connected in series to the high-voltage charger 200.

If it is determined in step S22 that the external charger is the low-voltage charger 210, the process proceeds to step S23. If, in step S23, it is determined that the absolute value of the difference between the first detected voltage VA and the second detected voltage VB is equal to or less than the first threshold ΔVjde1, the process proceeds to step S27. In step S27, the inter-battery switch 40, the first bypass switch 50, the second bypass switch 80, the motor-side switch 61, and the upper and lower-arm switches SWH and SWL of the inverter 20 are operated so that the first battery 31 and the second battery 32 are each connected in parallel to the low-voltage charger 210.

Specifically, the inter-battery switch 40 and the motor-side switch 61 are turned off, and the first bypass switch 50 and the second bypass switch 80 are turned on. The upper and lower-arm switches SWH and SWL of all phases of the inverter 20 are turned off. As a result, the first and second batteries 31 and 32 are charged in a state where they are connected in parallel to the low-voltage charger 210. At this time, because the potential difference between the first and second batteries 31 and 32 is small, the occurrence of a phenomenon where current flows from one of the batteries to the other can be suppressed, or even if this phenomenon occurs, the amount of current flowing can be minimized.

If a negative determination is made in step S23, the process proceeds to step S28, where it is determined whether the value obtained by subtracting the second detected voltage VB from the first detected voltage VA is equal to or less than the second threshold ΔVjde2. If it is determined in step S28 that "VA-VB > ΔVjde2", the charging of the first and second batteries 31 and 32 by the low-voltage charger 210 in both the motor-connected state and the parallel-connected state is prohibited. The situation in which it is determined in step S28 that "VA-VB > ΔVjde2" is one where the first detected voltage VA is higher than the second detected voltage VB, and the potential difference between the second detected voltage VB and the first detected voltage VA exceeds the second threshold value ΔVjde2.

On the other hand, if it is determined in step S28 that "VA-VB ≤ ΔVjde2", the process proceeds to step S29. The situation in which it is determined in step S28 that "VA-VB ≤ ΔVjde2" is one where either the second detected voltage VB is higher than the first detected voltage VA and the potential difference between the second detected voltage VB and the first detected voltage VA exceeds the first threshold value ΔVjde1, or the first detected voltage VA is higher than the second detected voltage VB and the potential difference between the second detected voltage VB and the first detected voltage VA is greater than the first threshold value ΔVjde1 but not exceeding the second threshold value ΔVjde2. In step S29, the connection state of the first battery 31 and the second battery 32 is set to a motor-connected state by operating the inter-battery switch 40, the first bypass switch 50, the second bypass switch 80, the motor-side switch 61, and the upper and lower-arm switches SWH and SWL of the inverter 20.

Specifically, the inter-battery switch 40 and the first bypass switch 50 are turned off, and the motor-side switch 61 and the second bypass switch 80 are turned on. All upper-arm switches SWH of the inverter 20 are turned off, and at least one lower-arm switch SWL of the inverter 20 is turned on. As a result, the connection state of the first and second batteries 31 and 32 to the low-voltage charger 210 becomes a motor-connected state, and the first and second batteries 31 and 32 are charged. In this situation, it is possible to suppress the occurrence of a phenomenon where current flows from the first battery 31 to the second battery 32, or even if this phenomenon occurs, the amount of current flowing can be minimized.

### (Modified Example)

Step S28 processing in Fig. 12 is eliminated, and step S29 processing may be performed when confirmed in step S23. In step S29, it is not limited to maintaining the lower-arm switch SWL in the on position; switching that repeatedly turns it on and off may also be performed. Additionally, switching that alternately turns the upper and lower-arm switches SWH and SWL on, in at least one phase, may be performed.

### (Fifth Embodiment)

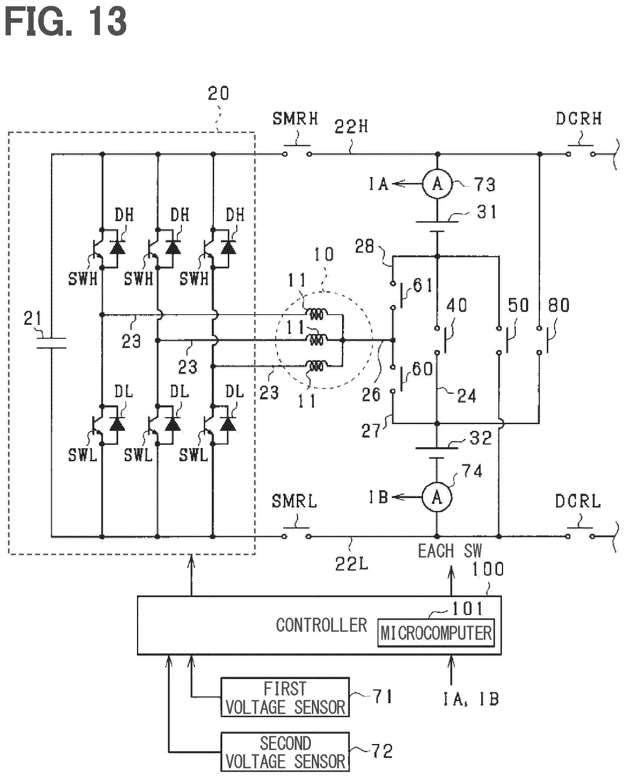

A fifth embodiment will be described below with reference to the drawings mainly in terms of differences from the fourth embodiment. In this embodiment, as shown in FIG. 13, in addition to the switch connecting the neutral point of the armature winding 11 to the negative terminal of the first battery 31 as a motor-side switch, a switch connecting the neutral point of the armature winding 11 to the positive terminal of the second battery 32 is also provided.

The neutral point of the armature winding 11 is connected to the first end of the common path 26. The second end of the common path 26 is connected to the first end of the first electrical path 27, and the second end of the first electrical path 27 is connected to the side of the second battery 32 that is nearer to the inter-battery switch 40 in the inter-battery electrical path 24. The second end of the common path 26 is connected to the first end of the second electrical path 28, and the second end of the second electrical path 28 is connected to the side of the first battery 31 that is nearer to the inter-battery switch 40 in the inter-battery electrical path 24. In this embodiment, the common path 26 and the first electrical path 27 correspond to a first motor-side electrical path, and the common path 26 and the second electrical path 28 correspond to a second motor-side electrical path. The common path 26 may be omitted, and in that case, the first end of each of the first electrical path 27 and the second electrical path 28 may be connected directly to the neutral point of the armature winding 11.

A first motor-side switch 60 is provided in the first electrical path 27. A second motor-side switch 61 is provided in the second electrical path 28.

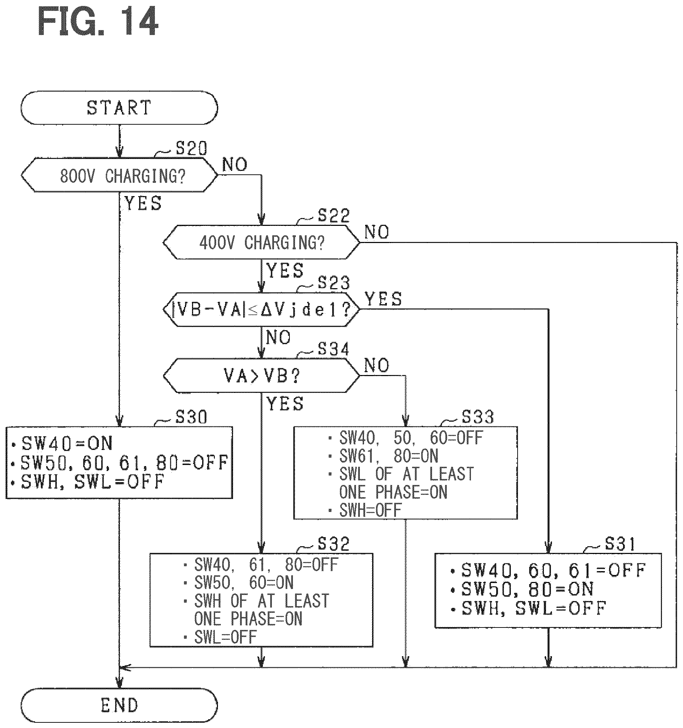

FIG. 14 illustrates the procedure of the charging control process of the present embodiment executed by the controller 100.

If it is determined in step S20 that the external charger is a high-voltage charger 200, the process proceeds to step S30. In step S30, the inter-battery switch 40 is turned on, and the first bypass switch 50, second bypass switch 80, first motor-side switch 60, second motor-side switch 61, and the upper and lower-arm switches SWH and SWL of the inverter 20 are turned off, so that the first battery 31 and the second battery 32 are connected in series to the high-voltage charger 200. As a result, the first battery 31 and the second battery 32 are charged in a state where they are connected in series to the high-voltage charger 200.

If it is determined in step S22 that the external charger is the low-voltage charger 210, the process proceeds to step S23. If, in step S23, it is determined that the absolute value of the difference between the first detected voltage VA and the second detected voltage VB is equal to or less than the first threshold ΔVjde1, the process proceeds to step S31. In step S31, the inter-battery switch 40, the first bypass switch 50, the second bypass switch 80, the first motor-side switch 60, the second motor-side switch 61, and the upper and lower-arm switches SWH and SWL of the inverter 20 are operated so that the first battery 31 and the second battery 32 are connected in parallel to the low-voltage charger 210.

Specifically, in step S31, the inter-battery switch 40, the first motor-side switch 60, and the second motor-side switch 61 are turned off, and the first bypass switch 50 and the second bypass switch 80 are turned on. The upper and lower-arm switches SWH and SWL of all phases of the inverter 20 are turned off. As a result, the first and second batteries 31 and 32 are charged in a state where they are connected in parallel to the low-voltage charger 210. At this time, because the potential difference between the first and second batteries 31 and 32 is small, the occurrence of a phenomenon where current flows from one of the batteries to the other can be suppressed, or even if this phenomenon occurs, the amount of current flowing can be minimized.

If a negative determination is made in step S23, the process proceeds to step S34, where it is determined which of the first detected voltage VA and the second detected voltage VB is higher. If it is determined in step S34 that "VA > VB," the process proceeds to step S32. In step S32, the inter-battery switch 40, the first bypass switch 50, the second bypass switch 80, the first motor-side switch 60, the second motor-side switch 61, and the upper and lower-arm switches SWH and SWL of the inverter 20 are operated so that the connection state of the first battery 31 and the second battery 32 becomes a first motor-through connection state.

Specifically, the inter-battery switch 40, the second motor-side switch 61, and the second bypass switch 80 are turned off, and the first bypass switch 50 and the first motor-side switch 60 are turned on. In addition, the lower-arm switch SWL of each phase of the inverter 20 us turned off, and the upper-arm switch SWH of at least one phase is turned on. As a result, the first and second batteries 31 and 32 are charged. At this time, because the potential difference between the first and second batteries 31 and 32 is small, it is possible to suppress the occurrence of the phenomenon where current flows from the second battery 32 to the first battery 31, or even if this phenomenon occurs, the amount of current flowing can be reduced.

On the other hand, if it is determined in step S34 that "VB > VA," the process proceeds to step S33. In step S33, the inter-battery switch 40, the first bypass switch 50, the second bypass switch 80, the first motor-side switch 60, the second motor-side switch 61, and the upper and lower-arm switches SWH and SWL of the inverter 20 are operated so that the connection state of the first battery 31 and the second battery 32 becomes a second motor-through connection state.

Specifically, the inter-battery switch 40, the first motor-side switch 60, and the first bypass switch 50 are turned off, while the second bypass switch 80 and the second motor-side switch 61 are turned on. All upper-arm switches SWH of the inverter 20 are turned off, and at least one lower-arm switch SWL of the inverter 20 is turned on. As a result, the first and second batteries 31 and 32 are charged. At this time, because the potential difference between the first and second batteries 31 and 32 is small, it is possible to suppress the occurrence of the phenomenon where current flows from the first battery 31 to the second battery 32, or even if this phenomenon occurs, the amount of current flowing can be reduced.

According to the described embodiment, regardless of the relationship between the terminal voltages of the first battery 31 and the second battery 32, it is possible to suppress the flow of current from one of the batteries to the other, or to reduce the amount of current flowing. In step S32 of FIG. 14, it is not limited to maintaining the upper-arm switch SWH in the on state; switching that repeatedly turns the switch on and off may also be performed. Alternatively, switching that alternately turns the upper and lower-arm switches SWH and SWL on in at least one phase may be performed. In step S33, it is not limited to maintaining the lower-arm switch SWL in the on state; switching that repeatedly turns the switch on and off may also be performed. Alternatively, switching that alternately turns the upper and lower-arm switches SWH and SWL on in at least one phase may be performed.

### (Sixth Embodiment)

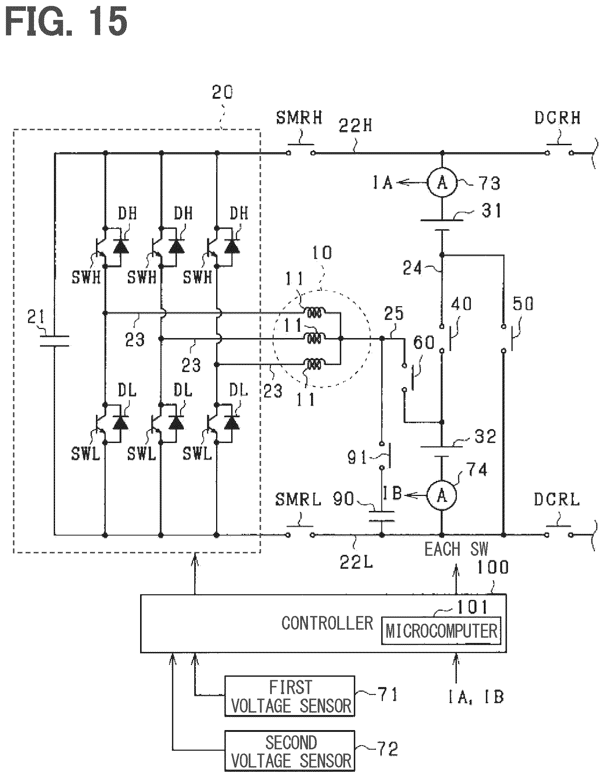

A sixth embodiment will be described below with reference to the drawings mainly in terms of differences from the first embodiment. In this embodiment, during the charging process when the low-voltage charger 210 is connected, switching that repeatedly turns the upper-arm switch SWH, which is included in the charging path of the second battery 32, on and off is performed. In this case, high-frequency current is generated as a result of the switching. In this embodiment, as shown in FIG. 15, the power converter is equipped with a capacitor 90 that suppresses the high-frequency current generated by the switching from flowing from the inverter 20 side to the second battery 32 and the low-voltage charger 210.

On the motor-side electrical path 25, closer to the neutral point than the motor-side switch 60, a part between the low-potential-side main switch SMRL and the low-potential-side charging switch DCRL in the low-potential-side electrical path 22L (which corresponds to a target path) is connected via a series connection of a connection switch 91 and the capacitor 90. The connection switch 91 may be a mechanical relay or a semiconductor switching element.

The controller 100 turns off the connection switch 91 during the switching control of the inverter 20 for driving the vehicle. As a result, when controlling the control amount of the motor 10 to the command value, it is possible to suppress any adverse effects on this control.

On the other hand, the controller 100 turns on the connection switch 91 during the charging process by the low-voltage charger 210, for example, at step S13 in the previous FIG. 2. As a result, when current flows through the motor-side electrical path 25, the noise or ripple contained in the current flowing through the motor-side electrical path 25 can be directed to the capacitor 90. On the other hand, during the charging process by the high-voltage charger 200 at step S11, the connection switch 91 is turned off. This is because during the charging process by the high-voltage charger 200, the switching of the inverter 20 is not performed.

According to the embodiment described above, during the charging process by the low-voltage charger 210, it is possible to suppress the high-frequency current generated due to switching from flowing from the inverter 20 side to the second storage battery 32 and the low-voltage charger 210.

### (Modified Example of Sixth Embodiment)

The capacitor 90 may be connected to the motor-side electrical path 25, and the connection switch 91 may be connected to the low-potential electrical path 22L.

The connection switch 91 may be omitted. In other words, the motor-side electrical path 25 and the low-potential electrical path 22L may be continuously connected.

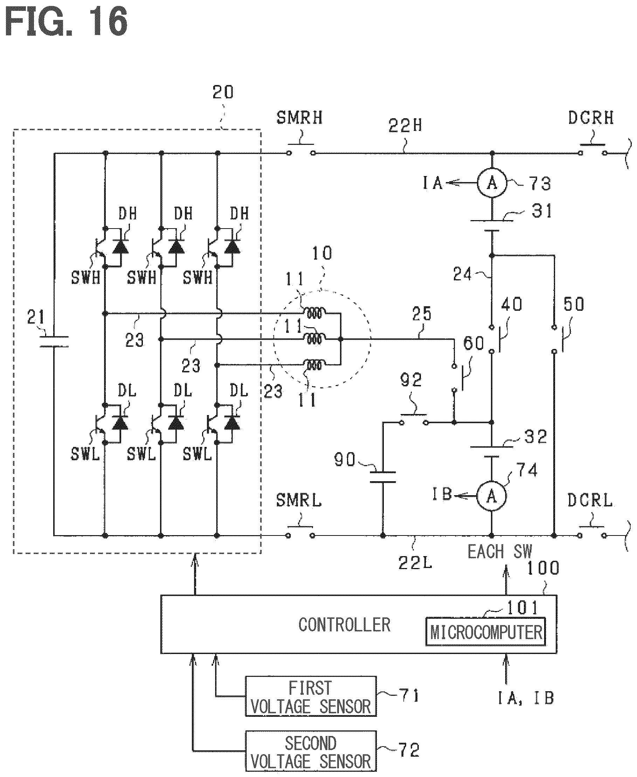

As shown in FIG. 16, the series connection of the connection switch 92 and the capacitor 90 may connect the low-potential electrical path 22L and the portion of the motor-side electrical path 25 that is closer to the second storage battery 32 than the motor-side switch 60.

Additionally, in the configuration shown in FIG. 16, the connection switch 92 may be omitted. In other words, the motor-side electrical path 25 and the low-potential electrical path 22L may be continuously connected.

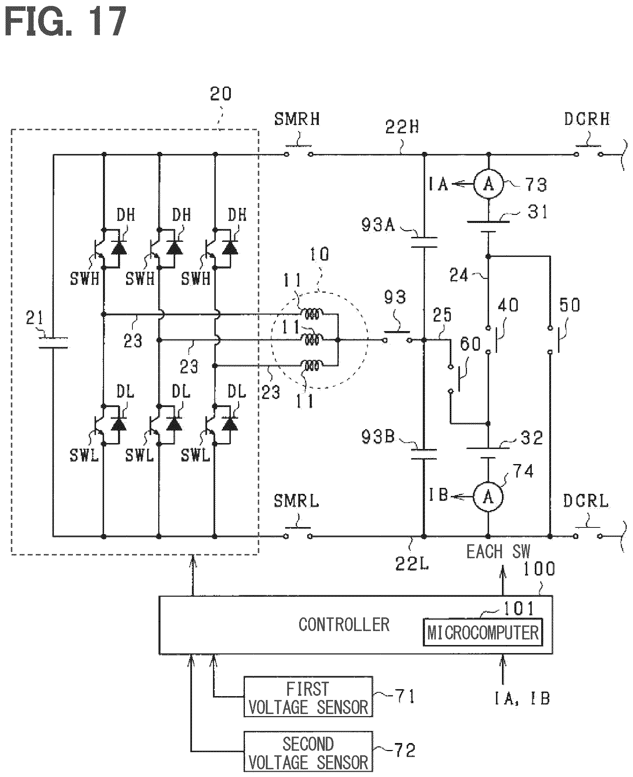

As shown in FIG. 17, multiple capacitors may be provided. Specifically, a connection switch 93 is provided on the motor-side electrical path 25, on the neutral point side relative to the motor-side switch 60. In the portion of the motor-side electrical path 25 between the motor-side switch 60 and the connection switch 93, the high-potential electrical path 22H (corresponding to a target path) is connected via the first capacitor 93A, and the low-potential electrical path 22L (corresponding to a target path) is connected via the second capacitor 93B.

In the configuration shown in FIG. 17, either the first capacitor 93A or the second capacitor 93B may be omitted.

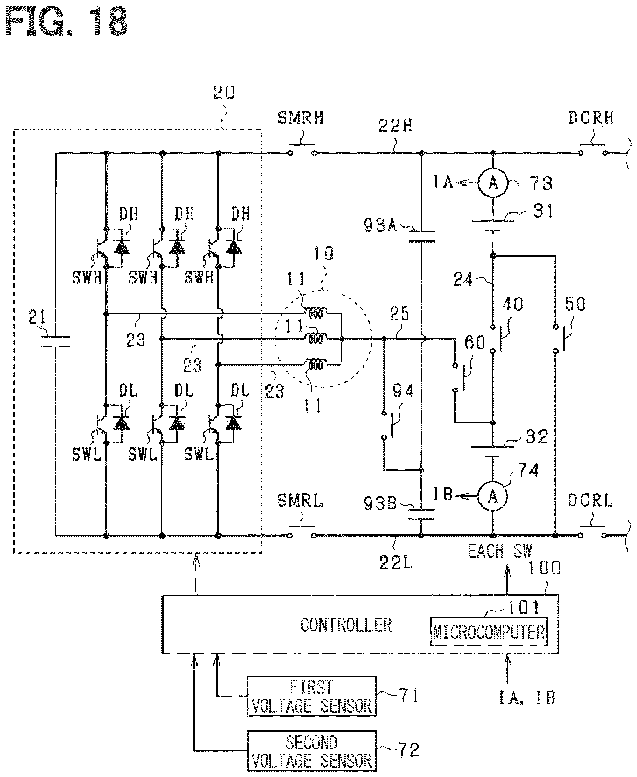

As shown in FIG. 18, the first end of the connection switch 94 is connected to the motor-side electrical path 25 on the neutral point side of the motor-side switch 60, and the first capacitor 93A and the second capacitor 93B may be connected to the second end of the connection switch 94.

### (Seventh Embodiment)

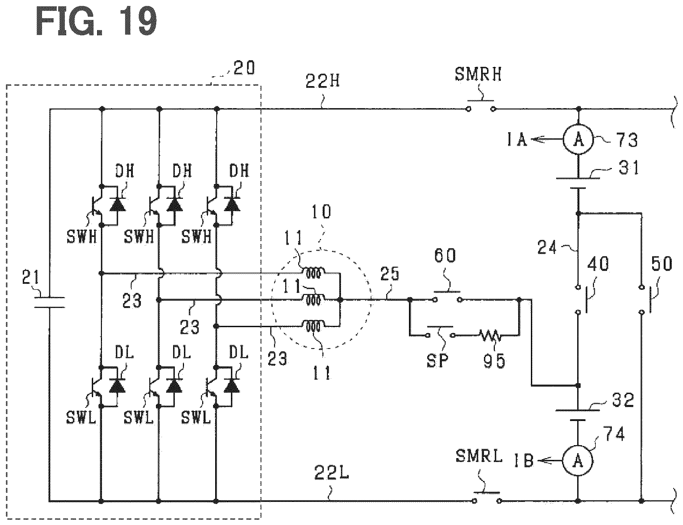

A seventh embodiment will be described below with reference to the drawings mainly in terms of differences from the first embodiment. As shown in FIG. 19, a series connection of a pre-charge switch SP and a resistor 95 is connected in parallel with the motor-side switch 60. In FIG. 19, for the sake of convenience, the controller 100 and other components are not shown.

The controller 100 performs a pre-charge process to charge the smoothing capacitor 21, for example, during the startup of the power converter. In this embodiment, even if an abnormality occurs in either the first storage battery 31 or the second storage battery 32, rendering it unusable, the pre-charge process can still be performed using the remaining storage battery.

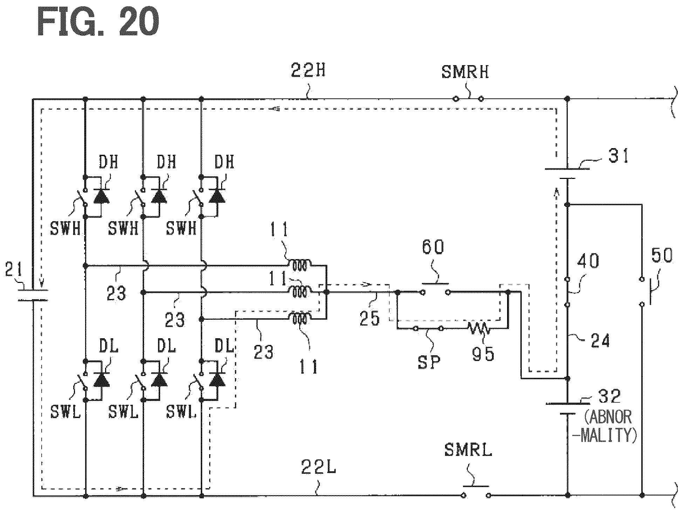

First, using FIG. 20, the case where an abnormality occurs in the second storage battery 32 will be explained. In this case, the controller 100 turns on the high-potential main switch SMRH, the pre-charge switch SP, and the inter-battery switch 40, while turning off the low-potential main switch SMRL, the motor-side switch 60, and the bypass switch 50. The controller 100 turns off the upper and lower-arm switches SWH and SWL of all phases of the inverter 20. As a result, the smoothing capacitor 21 can be charged by the first storage battery 31.

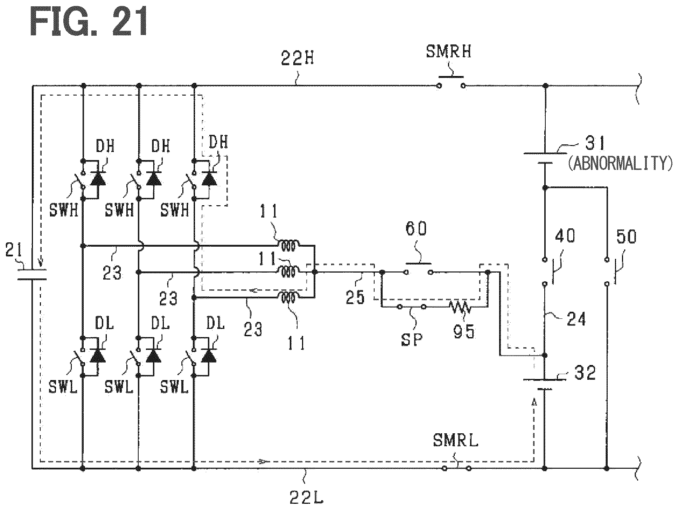

Next, using FIG. 21, the case where an abnormality occurs in the first storage battery 31 will be explained. In this case, the controller 100 turns on the low-potential main switch SMRL and the pre-charge switch SP, while turning off the high-potential main switch SMRH, the motor-side switch 60, the inter-battery switch 40, and the bypass switch 50. The controller 100 turns off the upper and lower-arm switches SWH and SWL of all phases of the inverter 20. As a result, the smoothing capacitor 21 can be charged by the second storage battery 32.

### (Eighth Embodiment)

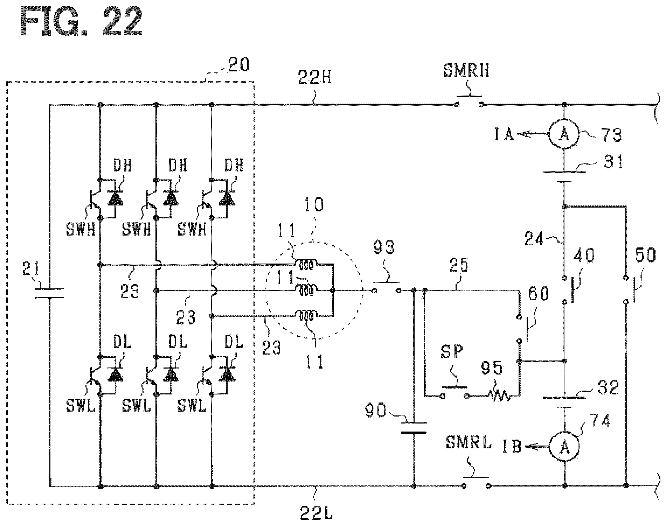

An eighth embodiment will be described below with reference to the drawings mainly in terms of differences from the sixth and seventh embodiments. In this embodiment, as shown in FIG. 22, a connection switch 93 and a capacitor 90 are provided. The first terminal of the capacitor 90 is connected to a part of the motor-side electrical path 25 between the connection point with the pre-charge switch SP and the connection switch 92. The second terminal of the capacitor 90 is connected to the inverter 20 side of the low-potential-side electrical path 22L, relative to the low-potential-side main switch SMRL.

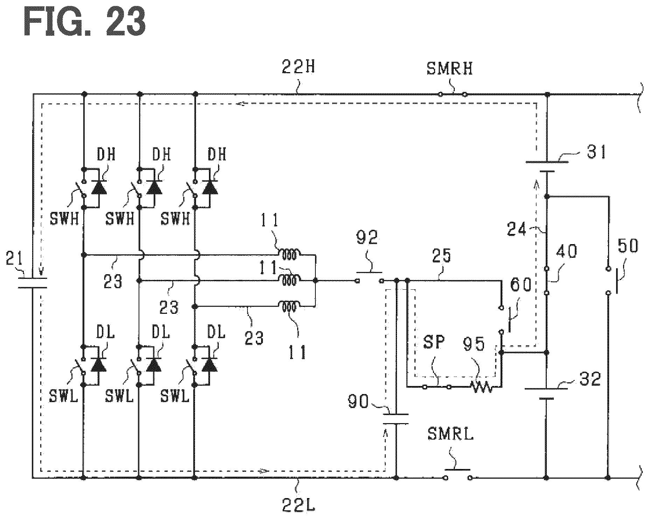

The controller 100 can charge both the smoothing capacitor 21 and the capacitor 90 simultaneously during the pre-charge process for charging the smoothing capacitor 21. Specifically, as shown in FIG. 23, the controller 100 turns on the high-potential-side main switch SMRH, the pre-charge switch SP, and the inter-battery switch 40, while turning off the low-potential-side main switch SMRL, the motor-side switch 60, and the bypass switch 50. The controller 100 turns off the upper and lower-arm switches SWH and SWL of all phases of the inverter 20.

### (Modified Example of Eighth Embodiment)

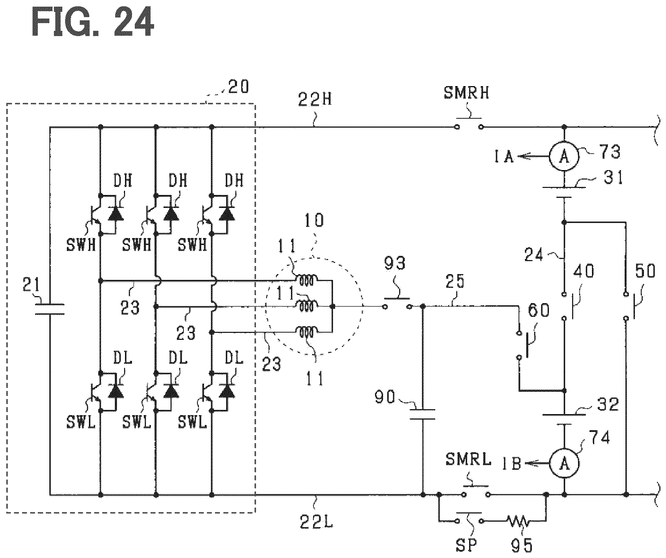

As shown in FIG. 24, the series connection of the pre-charge switch SP and the resistor 95 may be connected in parallel with the low-potential-side main switch SMRL.

### (Other Embodiments)

The above embodiments may be changed and carried out as follows.

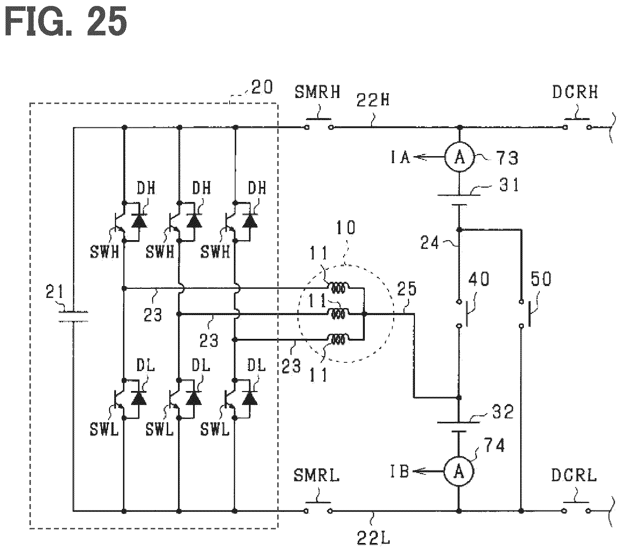

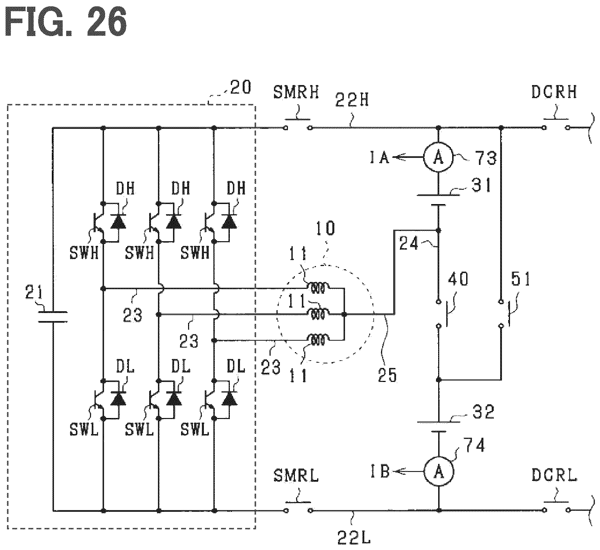

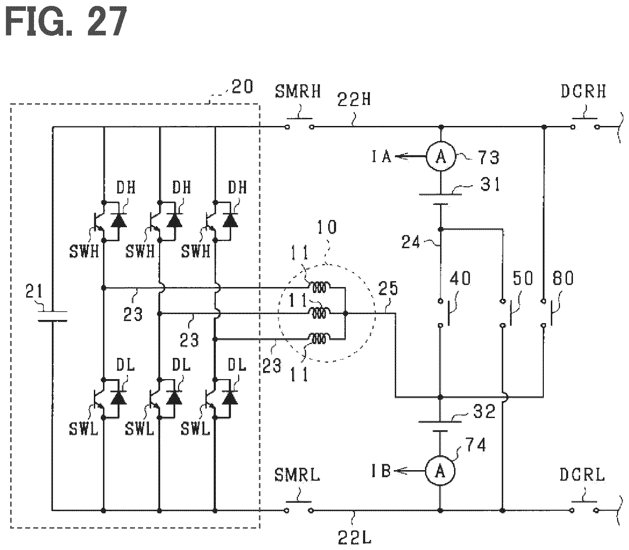

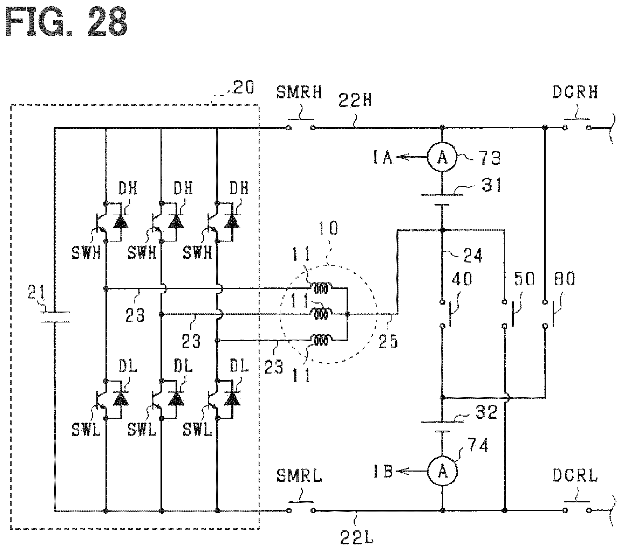

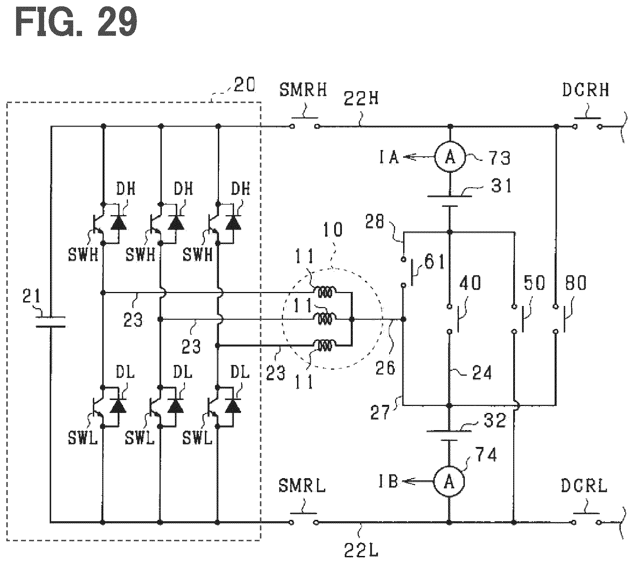

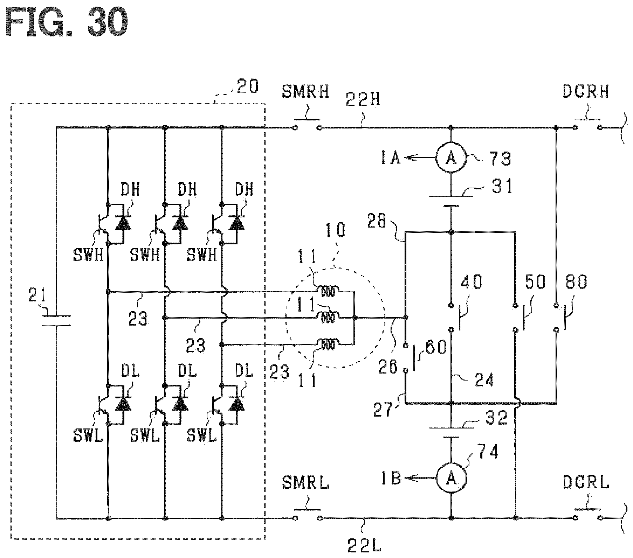

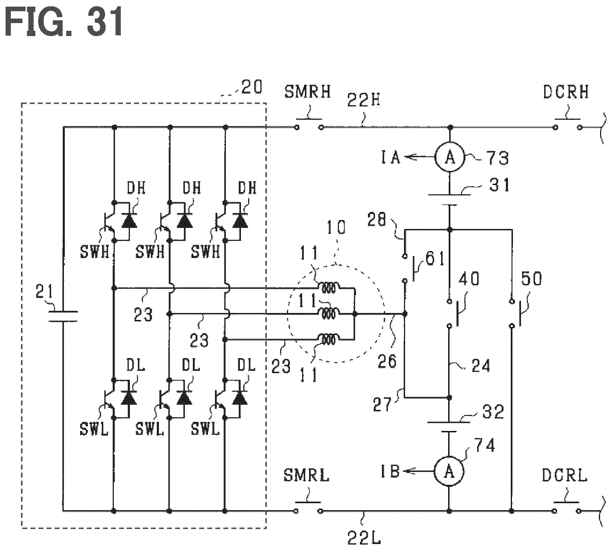

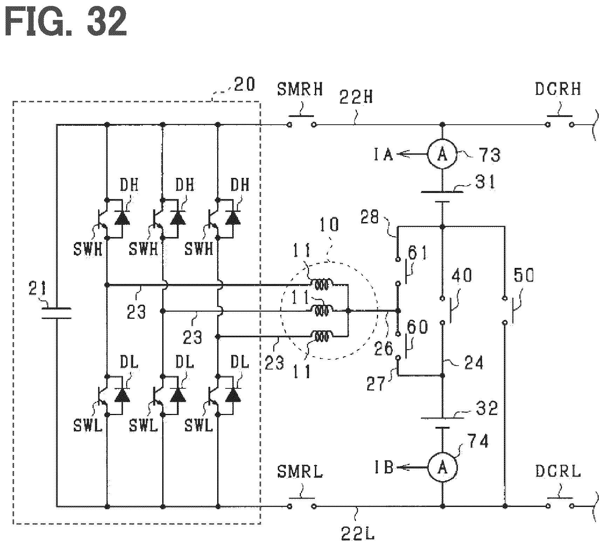

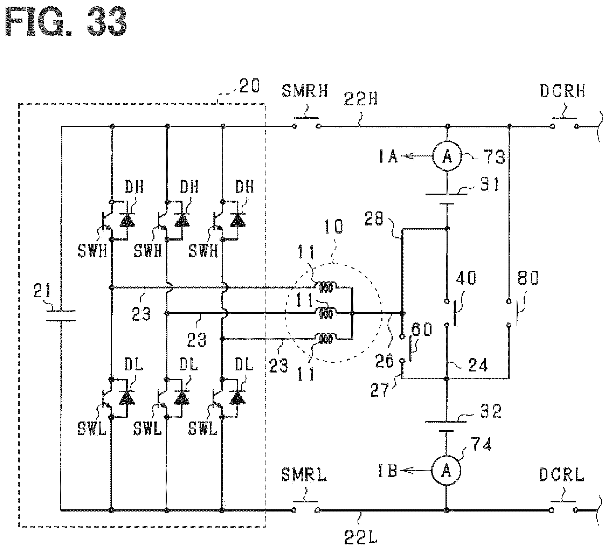

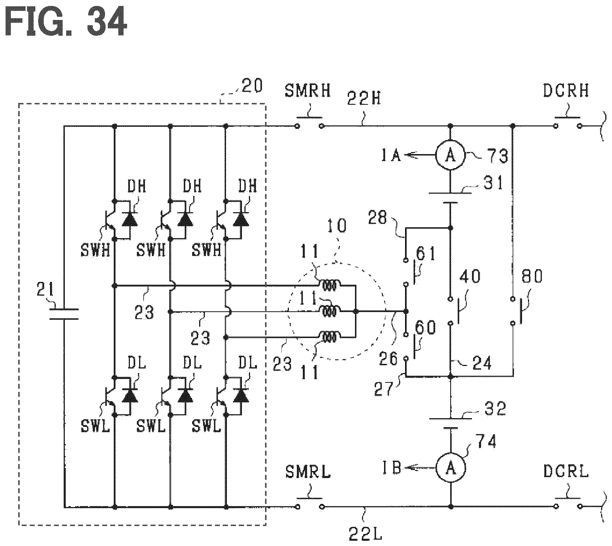

The circuit configuration of the power converter in each of the above embodiments can be modified, for example, as follows (A) to (J).
(A) As shown in FIG. 25, the configuration illustrated in FIG. 1 may omit the motor-side switch 60.
(B) As shown in FIG. 26, the configuration illustrated in FIG. 5 may omit the motor-side switch 61.
(C) As shown in FIG. 27, the configuration illustrated in FIG. 7 may omit the motor-side switch 60.
(D) As shown in FIG. 28, the configuration illustrated in FIG. 11 may omit the motor-side switch 61.
(E) As shown in FIG. 29, the configuration illustrated in FIG. 13 may omit the first motor-side switch 60. In this case, if a negative determination is made in step S34 of FIG. 14, charging by the low-voltage charger 210 in the motor-connected state should be prohibited.
(F) As shown in FIG. 30, the configuration illustrated in FIG. 13 may omit the second motor-side switch 61. In this case, if an affirmative determination is made in step S34 of FIG. 14, charging by the low-voltage charger 210 in the motor-connected state may be prohibited.
(G) As shown in FIG. 31, the configuration illustrated in FIG. 13 may omit both the first motor-side switch 60 and the second bypass switch 80.
(H) As shown in FIG. 32, the configuration illustrated in FIG. 13 may omit the second bypass switch 80.
(I) As shown in FIG. 33, the configuration illustrated in FIG. 13 may omit both the second motor-side switch 61 and the first bypass switch 50.
(J) As shown in FIG. 34, the configuration illustrated in FIG. 13 may omit the first bypass switch 50.

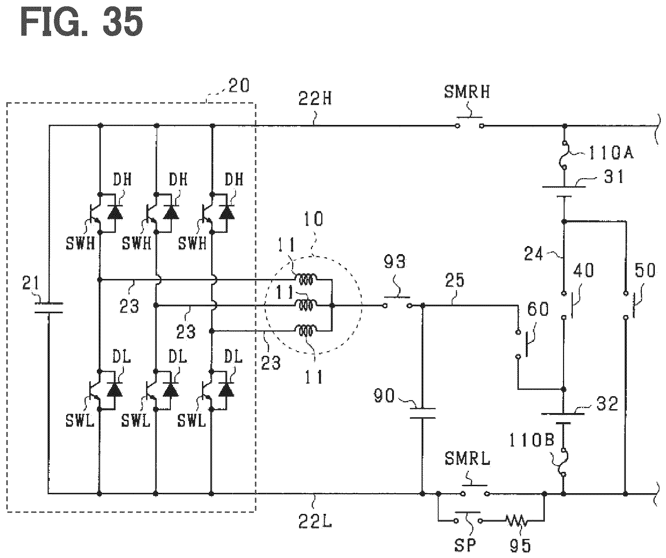

As shown in FIG. 35, the positive terminal of the first battery 31 and the high-potential electrical path 22H may be connected via the first fuse 110A. The negative terminal of the second battery 32 and the low-potential electrical path 22L may be connected via the second fuse 110B.

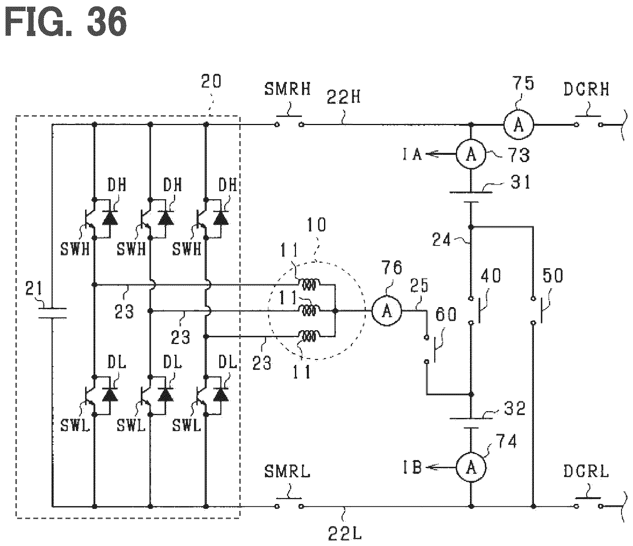

As shown in FIG. 36, a third current sensor 75 may be provided in the portion of the high-potential electrical path 22H between the connection point with the first battery 31 and the high-potential charging switch DCRH. A fourth current sensor 76 can be provided at any position in the motor-side electrical path 25. For example, the fourth current sensor 76 may be provided on the neutral point side of the motor-side switch 60 within the motor-side electrical path 25. At least two or more of the first to fourth current sensors 73 to 76 may be provided. This allows for the charging control of each battery 31 and 32 with as few current sensors as possible. A current sensor that detects the current flowing through each conductive member 23 may be provided, and instead of the detected value of the fourth current sensor, the total value of the current detected values flowing through each conductive member 23 may be used.

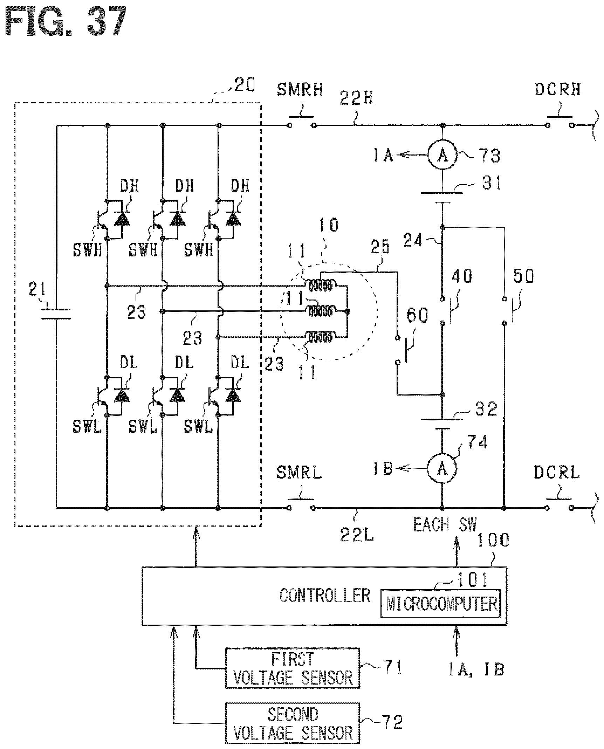

The connection destination of the motor-side electrical path 25 is not limited to the neutral point of the armature winding 11. For example, as shown in FIG. 37, it may be an intermediate part of the armature winding 11.

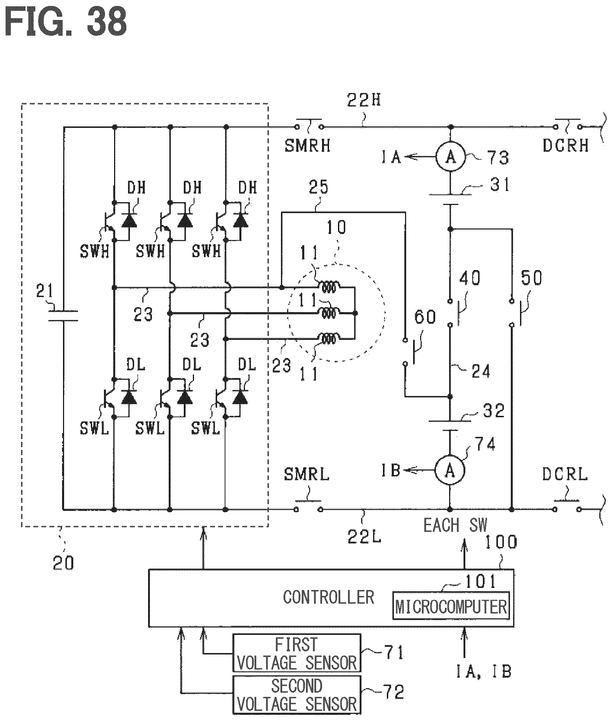

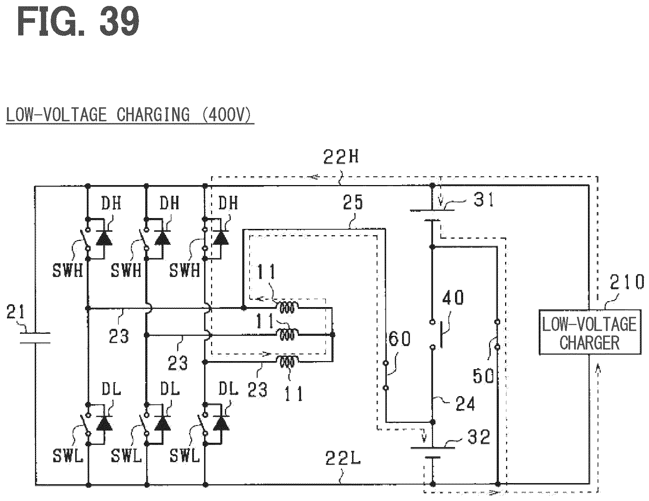

The connection destination of the motor-side electrical path 25 may be, for example, a conductive member 23, as shown in FIG. 38.. In this case, during the charging process by the low-voltage charger 210, as shown in FIG. 39, the upper-arm switch SWH in the phases other than the phase in which the motor-side electrical path 25 is connected to the conductive member 23 should be turned on, and the lower-arm switch SWL should be turned off.

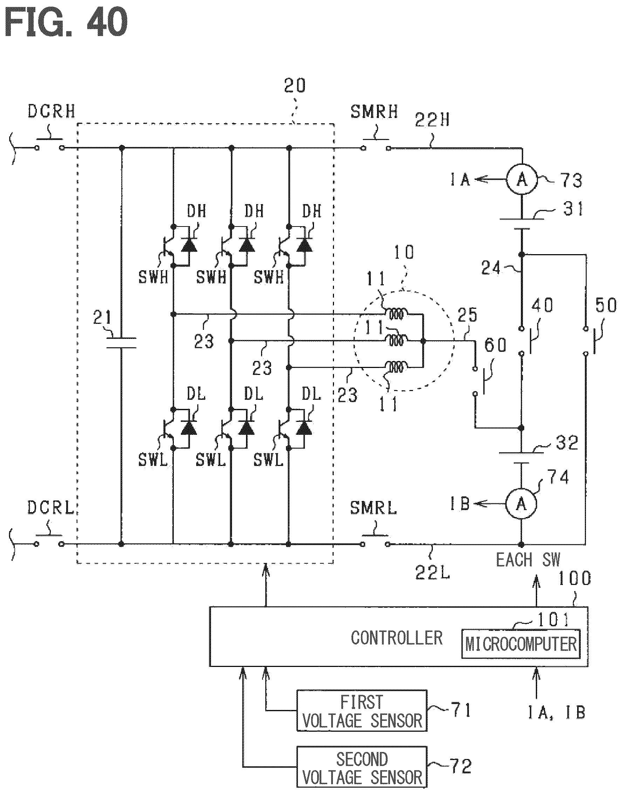

As shown in FIG. 40, the high-potential charging switch DCRH and the positive terminal connection part may be provided on the side of the high-potential electrical path 22H opposite to the first battery 31 with respect to the inverter 20. Similarly, the low-potential charging switch DCRL and the negative terminal connection part may be provided on the side of the low-potential electrical path 22L opposite to the second battery 32 with respect to the inverter 20.

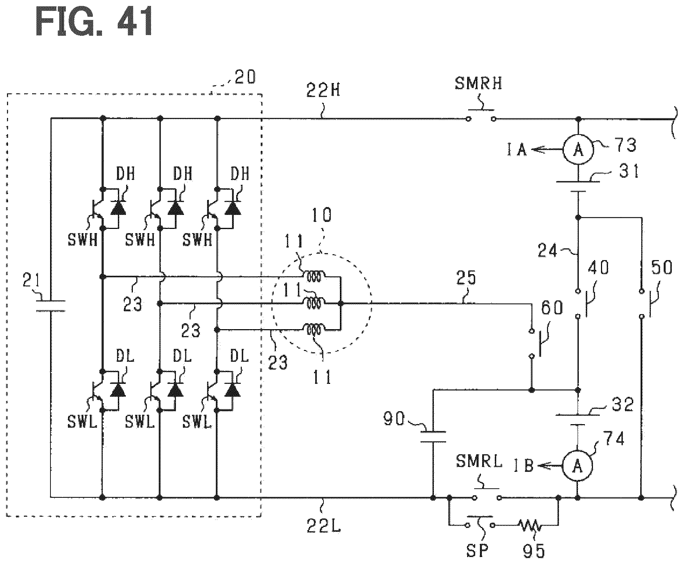

As shown in FIG. 41, one end of the capacitor 90 may be connected to the motor-side electrical path 25 on the side closer to the second battery 32 than the motor-side switch 60. In this case, a connection switch is unnecessary.

Each of the main switches SMRH, SMRL, the charging switches DCRH, DCRL, the inter-battery switch 40, the bypass switch, the motor-side switch, and the connection switch is not limited to being composed of a single switch. They may also be constructed by a series connection of multiple switches or a parallel connection of multiple switches.

The switches of the inverter 20 are not limited to IGBTs; for example, they may also be N-channel MOSFETs equipped with body diodes. In this case, the high-potential terminal of the N-channel MOSFET will be the drain, and the low-potential terminal will be the source.

The motor is not limited to being star-connected; it can also be delta-connected. The motor and inverter are not limited to three-phase configurations; they may also be two-phase or four-phase or higher configurations. The motor is not limited to a permanent magnet synchronous machine with permanent magnets as field poles on the rotor; it can also be a wound field synchronous machine with field windings as field poles on the rotor. In this case, the rotor may be equipped with both field windings and permanent magnets. The motor is not limited to a synchronous machine; it can also be an induction machine.

The storage unit to be charged by an external charger is not limited to a storage battery; it can also be, for example, a large-capacity electric double-layer capacitor, or it can be equipped with both a storage battery and an electric double-layer capacitor.

A mobile object on which the power converter is mounted is not limited to a vehicle, and may be, for example, an aircraft or a ship. The installation location of the power converter is not limited to mobile object; it can also be a stationary device.

The control units and methods thereof described in the present disclosure may be implemented by a dedicated computer including a processor programmed to execute one or more functions embodied by a computer program and a memory. Alternatively, the controller and the method described in the present disclosure may be realized by a dedicated computer configured as a processor with one or more dedicated hardware logic circuits. Alternatively, the controller and method described in the present disclosure may be realized by one or more dedicated computer, which is configured as a combination of a processor and a memory, which are programmed to perform one or more functions, and a processor which is configured with one or more hardware logic circuits. The computer program may be stored in a computer-readable non-transitory tangible recording medium as an instruction executed by a computer.

The following describes characteristic configurations extracted from each of the above-mentioned embodiments.

### (Configuration 1)

A power converter includes: a high-potential electrical path (22H) that is electrically connected to a positive terminal of a first power storage unit (31); a low-potential electrical path (22L) that is electrically connected to a negative terminal of a second power storage unit (32); an inverter (20) that has an upper-arm switch (SWH) electrically connected to the high-potential electrical path, and a lower-arm switch (SWL) electrically connected to the low-potential electrical path; a motor (10) that has an armature winding (11) electrically connected to a connection point between the upper-arm switch and the lower-arm switch via a conductive member (23); an inter-storage switch (40) that is located at an inter-storage electrical path (24) that electrically connects a negative terminal of the first power storage unit to a positive terminal of the second power storage unit; a bypass switch (50, 51) that establishes at least one of an electrical connection between the negative terminal of the first power storage unit and the negative terminal of the second power storage unit, or an electrical connection between the positive terminal of the first power storage unit and the positive terminal of the second power storage unit; and a motor-side electrical path (25-28) that electrically connects the inter-storage electrical path to either the armature winding or the conductive member.

### (Configuration 2)

In the power converter described in the Configuration 1, the bypass switch (50) is a switch that electrically connects the negative terminal of the first power storage unit to the negative terminal of the second power storage unit; and the motor-side electrical path (25) is a path that electrically connects the armature winding to a section of the inter-storage electrical path between the inter-storage switch and the second power storage unit. The power converter further includes a motor-side switch (60) located at the motor-side electrical path.

### (Configuration 3)

The power converter described in the Configuration 2 further includes a controller (100) that determines whether to set a connection state between the first power storage unit and the second power storage unit to a series connection or a motor-via connection. The motor-via connection is a state in which the positive terminal of the second power storage unit is connected to the high-potential electrical path via the motor-side electrical path, the armature winding, and the inverter. The controller turns on the inter-storage switch and turns off the bypass switch, on a condition that the controller determines to set the connection state between the first power storage unit and the second power storage unit to the series connection; and turns off the inter-storage switch and turns on the bypass switch and the motor-side switch, on a condition that the controller determines to set the connection state between the first power storage unit and the second power storage unit to the motor-via connection.

### (Configuration 4)

In the power converter described in the Configuration 2, the bypass switch is a first bypass switch (50). The power converter described in the Configuration 2 further includes a second bypass switch (80) that electrically connects the positive terminal of the first power storage unit to the positive terminal of the second power storage unit.

### (Configuration 5)

The power converter described in the Configuration 4 further includes a controller (100) that determines whether to set a connection state between the first power storage unit and the second power storage unit to a series connection, a parallel connection, or a motor-via connection. The motor-via connection is a state in which the positive terminal of the second power storage unit is connected to the high-potential electrical path via the motor-side electrical path, the armature winding, and the inverter. The controller turns on the inter-storage switch and turn off the first bypass switch and the second bypass switch, on a condition that the controller determines to set the connection state between the first power storage unit and the second power storage unit to the series connection; executes a first operation, on a condition that the controller determines to set the connection state between the first power storage unit and the second power storage unit to the parallel connection; and executes a second operation, on a condition that the controller determines to set the connection state between the first power storage unit and the second power storage unit to the motor-via connection. The first operation is an operation that turns off the inter-storage switch and the motor-side switch and turns on the first bypass switch and the second bypass switch. The second operation is an operation that turns off the inter-storage switch and the second bypass switch and turns on the first bypass switch and the motor-side switch, and performs a switching operation of the inverter. The switching operation of the inverter is either an operation that turns off the lower-arm switch in each phase of the motor and turns on the upper-arm switch in at least one phase of the motor, or an operation that repetitively turns on and off the upper-arm switch in at least one phase of the motor, on a condition that the upper-arm switch and the lower-arm switch in a same phase of the motor are not turned on at a same time.

### (Configuration 6)

In the power converter described in the Configuration 5, the controller determines to set the connection state between the first power storage unit and the second power storage unit to the parallel connection, on a condition that a potential difference between the first power storage unit and the second power storage unit is smaller than or equal to a first threshold (ΔVjde1); and determines to set the connection state between the first power storage unit and the second power storage unit to the motor-via connection, on a condition that the potential difference between the first power storage unit and the second power storage unit is larger than the first threshold, and a value acquired by subtracting a voltage of the first power storage unit from a voltage of the second power storage unit is equal to or smaller than a second threshold (ΔVjde2), which is larger than the first threshold.

### (Configuration 7)

In the power converter described in the Configuration 1, the bypass switch (51) is a switch that electrically connects the positive terminal of the first power storage unit to the positive terminal of the second power storage unit; and the motor-side electrical path (25) is a path that electrically connects the armature winding to a section of the inter-storage electrical path between the inter-storage switch and the first power storage unit. The power converter described in the Configuration 1 further includes a motor-side switch (61) located at the motor-side electrical path.

### (Configuration 8)

The power converter described in the Configuration 7 further includes a controller that determines whether to set a connection state between the first power storage unit and the second power storage unit to a series connection or a motor-via connection. The motor-via connection is a state in which the negative terminal of the first power storage unit is connected to the low-potential electrical path via the motor-side electrical path, the armature winding, and the inverter. The controller turns on the inter-storage switch and turn off the bypass switch, on a condition that the controller determines to set the connection state between the first power storage unit and the second power storage unit to the series connection; and turns off the inter-storage switch and turn on the bypass switch and the motor-side switch, on a condition that the controller determines to set the connection state between the first power storage unit and the second power storage unit to the motor-via connection.

### (Configuration 9)

In the power converter described in the Configuration 1, the bypass switch is one of bypass switches including a first bypass switch (50) and a second bypass switch (80). The first bypass switch electrically connects the negative terminal of the first power storage unit to the negative terminal of the second power storage unit, and the second bypass switch electrically connecting the positive terminal of the first power storage unit to the positive terminal of the second power storage unit. In the power converter described in the Configuration 1, the motor-side electrical path (25) is a path that electrically connects the armature winding to a section of the inter-storage electrical path between the inter-storage switch and the first power storage unit. The power converter described in the Configuration 1 further includes a motor-side switch (61) located at the motor-side electrical path.

### (Configuration 10)

The power converter described in the Configuration 9 further includes a controller (100) that determines whether to set a connection state between the first power storage unit and the second power storage unit to a series connection, a parallel connection, or a motor-via connection, the motor-via connection being a state in which the negative terminal of the first power storage unit is connected to the low-potential electrical path via the motor-side electrical path, the armature winding, and the inverter. The controller turns on the inter-storage switch and turns off the first bypass switch and the second bypass switch, on a condition that the controller determines to set the connection state between the first power storage unit and the second power storage unit to the series connection; executes a first operation, on a condition that the controller determines to set the connection state between the first power storage unit and the second power storage unit to the parallel connection; and executes a second operation, on a condition that the controller determines to set the connection state between the first power storage unit and the second power storage unit to the motor-via connection. The first operation is an operation that turns off the inter-storage switch and the motor-side switch and turns on the first bypass switch and the second bypass switch. The second operation is an operation that turns off the inter-storage switch and the first bypass switch and turns on the second bypass switch and the motor-side switch, and performs a switching operation of the inverter. The switching operation of the inverter is either an operation that turns off the lower-arm switch in each phase of the motor and turns on the upper-arm switch in at least one phase of the motor, or an operation that repetitively turns on and off the upper-arm switch in at least one phase of the motor on a condition that the upper-arm switch and the lower-arm switch in a same phase of the motor are not turned on at a same time.

### (Configuration 11)

In the power converter described in the Configuration 10, the controller executes the first operation based on: determining to set the connection state between the first power storage unit and the second power storage unit to the parallel connection; and a potential difference between the first power storage unit and the second power storage unit is smaller than or equal to a first threshold (ΔVjde1). The controller executes the second operation based on: determining to set the connection state between the first power storage unit and the second power storage unit to the motor-via connection; and the potential difference between the first power storage unit and the second power storage unit is larger than the first threshold, and a value acquired by subtracting a voltage of the second power storage unit from a voltage of the first power storage unit is smaller than or equal to a second threshold (ΔVjde2), which is larger than the first threshold.

### (Configuration 12)

In the power converter described in the Configuration 1, the bypass switch is one of bypass switches including a first bypass switch (50) and a second bypass switch (80); the first bypass switch electrically connects the negative terminal of the first power storage unit to the negative terminal of the second power storage unit; the second bypass switch electrically connects the positive terminal of the first power storage unit to the positive terminal of the second power storage unit; the motor-side electrical path is one of motor-side electrical paths including a first motor-side electrical path (26, 27) and a second motor-side electrical path (26, 28); the first motor-side electrical path electrically connects the armature winding to a section of the inter-storage electrical path between the inter-storage switch and the second power storage unit; and the second motor-side electrical path electrically connects the armature winding to a section of the inter-storage electrical path between the inter-storage switch and the first power storage unit. The power converter described in the Configuration 1 further includes: a first motor-side switch (60) that is located at the first motor-side electrical path; and a second motor-side switch (61) that is located at the second motor-side electrical path.

### (Configuration 13)

The power converter described in the Configuration 12 further includes a controller (100) that determines whether to set a connection state between the first power storage unit and the second power storage unit to a series connection, a parallel connection, a first motor-via connection, or a second motor-via connection. The first motor-via connection is a state in which the negative terminal of the second power storage unit is connected to the high-potential electrical path via the motor-side electrical path, the armature winding, and the inverter. The second motor-via connection is a state in which the negative terminal of the first power storage unit is connected to the low-potential electrical path via the motor-side electrical path, the armature winding and the inverter. The controller turns on the inter-storage switch and turns off the first bypass switch and the second bypass switch, on a condition that the controller determines to set the connection state between the first power storage unit and the second power storage unit to the series connection; executes a first operation, on a condition that the controller determines to set the connection state between the first power storage unit and the second power storage unit to the parallel connection; executes a second operation, on a condition that the controller determines to set the connection state between the first power storage unit and the second power storage unit to the first motor-via connection; and executes a third operation, on a condition that the controller determines to set the connection state between the first power storage unit and the second power storage unit to the second motor-via connection. The first operation is an operation that turns off the inter-storage switch and at least one of the first motor-side switch or the second motor-side switch, and turns on the first bypass switch and the second bypass switch. The second operation is an operation that turns off the inter-storage switch, the second bypass switch, and the second motor-side switch, turns on the first bypass switch and the first motor-side switch, and performs a first switching operation of the inverter. The third operation is an operation that turns off the inter-storage switch, the first bypass switch and the first motor-side switch, turns on the second bypass switch and the second motor-side switch, and performs a second switching operation of the inverter. The first switching operation of the inverter is either an operation that turns off the lower-arm switch in each phase of the motor and turns on the upper-arm switch in at least one phase of the motor, or an operation that repetitively turns on and off the upper-arm switch in at least one phase of the motor on a condition that the upper-arm switch and the lower-arm switch in a same phase of the motor are not turned on at a same time. The second switching operation of the inverter is either an operation that turns off the upper-arm switch in each phase of the motor and turns on the lower-arm switch in at least one phase of the motor, or an operation that repetitively turns on and off the lower-arm switch in at least one phase of the motor on a condition that the upper-arm switch and the lower-arm switch in a same phase of the motor are not turned on at a same time.

### (Configuration 14)

In the power converter described in the Configuration 13, the controller determines to set the connection state between the first power storage unit and the second power storage unit to the parallel connection, on a condition that a potential difference between the first power storage unit and the second power storage unit is smaller than or equal to a first threshold (ΔVjde1); determines to set the connection state between the first power storage unit and the second power storage unit to the first motor-via connection, on a condition that the potential difference between the first power storage unit and the second power storage unit is larger than the first threshold, and a voltage of the first power storage unit is higher than a voltage of the second power storage unit; and determines to set the connection state between the first power storage unit and the second power storage to the second motor-via connection, on a condition that the potential difference between the first power storage unit and the second power storage unit is larger than the first threshold, and the voltage of the second power storage unit is higher than the voltage of the first power storage unit.

### (Configuration 15)

In the power converter described in any one of the Configurations 3, 5, 6, 8, 10, and 11, a positive terminal of a charger (200, 210) is capable of being electrically connected to the high-potential electrical path; and a negative terminal of the charger is capable of being electrically connected to the low-potential electrical path. In the power converter described in any one of the Configurations 3, 5, 6, 8, 10, and 11, the controller determines to set the connection state between the first power storage unit and the second power storage unit to the series connection, on a condition that the charger connected to the high-potential electrical path and the low-potential electrical path is a high-voltage charger (200); and determines to set the connection state between the first power storage unit and the second power storage unit to the motor-via connection, on a condition that the charger connected to the high-potential electrical path and the low-potential electrical path is a low-voltage charger (210), which has a lower charging voltage than the high-voltage charger.

### (Configuration 16)

In the power converter described in the Configuration 13 or 14, a positive terminal of a charger (200, 210) is capable of being electrically connected to the high-potential electrical path; and a negative terminal of the charger is configured to be electrically connected to the low-potential electrical path. In the power converter described in the Configuration 13 or 14, the controller determines to set the connection state between the first power storage unit and the second power storage unit to the series connection, on a condition that the charger connected to the high-potential electrical path and the low-potential electrical path is a high-voltage charger (200); and determines to set the connection state between the first power storage unit and the second power storage unit to either the first motor-via connection or the second motor-via connection, on a condition that the charger connected to the high-potential electrical path and the low-potential electrical path is a low-voltage charger (210), which has a lower charging voltage than the high-voltage charger.

### (Configuration 17)

The power converter described in any one of the Configurations 1 to 16 further includes a capacitor (90, 93A, 93B) electrically connects the motor-side electrical path to a target path being at least one of the high-potential electrical path or the low-potential electrical path.

### (Configuration 18)

The power converter described in the Configuration 17 further includes a connection switch (91-94) that is turned on to electrically connect the motor-side electrical path to the target path with the capacitor; and that is turned off to cut off an electrical connection between the capacitor and at least one of the target path or the motor-side electrical path.

### (Configuration 19)

In the power converter described in the Configuration 18, the connection switch is turned on upon determining that a current flows through the motor-side electrical path.

### (Configuration 20)

The power converter described in any one of the Configurations 1 to 19 further includes: a smoothing capacitor (21) that electrically connects the high-potential electrical path to the low-potential electrical path and smoothens an input voltage of the inverter; and a series connector having a switch (SP) and a resistor (95) connected in series. In the power converter described in any one of the Configurations 1 to 19, the capacitor electrically connects the target path to a section of the motor-side electrical path between a motor-side switch (60) and the armature winding; and the series connector is connected to the motor-side switch in parallel.

### (Configuration 21)

The power converter described in any one of the Configurations 1 to 19 further includes: a smoothing capacitor (21) that electrically connects the high-potential electrical path to the low-potential electrical path, and smoothens an input voltage of the inverter; and a series connector having a switch (SP) and a resistor (95) connected in series. In the power converter described in any one of the Configurations 1 to 19, the series connector is connected in parallel to a motor-side switch (60) located at the motor-side electrical path.

Although the present disclosure has been described in accordance with the examples, it is understood that the disclosure is not limited to such examples or structures. The present disclosure encompasses various modifications and variations within the scope of equivalents. In addition, while the various elements are shown in various combinations and configurations, which are exemplary, other combinations and configurations, including more, less or only a single element, are also within the spirit and scope of the present disclosure.

## Claims

1. A power converter comprising:
a high-potential electrical path (22H) configured to be electrically connected to a positive terminal of a first power storage unit (31);
a low-potential electrical path (22L) configured to be electrically connected to a negative terminal of a second power storage unit (32);
an inverter (20) having
an upper-arm switch (SWH) electrically connected to the high-potential electrical path, and
a lower-arm switch (SWL) electrically connected to the low-potential electrical path;
a motor (10) having an armature winding (11) electrically connected to a connection point between the upper-arm switch and the lower-arm switch via a conductive member (23);
an inter-storage switch (40) located at an inter-storage electrical path (24) that electrically connects a negative terminal of the first power storage unit to a positive terminal of the second power storage unit;
a bypass switch (50, 51) configured to establish at least one of
an electrical connection between the negative terminal of the first power storage unit and the negative terminal of the second power storage unit, or
an electrical connection between the positive terminal of the first power storage unit and the positive terminal of the second power storage unit; and
a motor-side electrical path (25-28) configured to electrically connect the inter-storage electrical path to either the armature winding or the conductive member.

2. The power converter according to Claim 1, wherein
the bypass switch (50) is a switch configured to electrically connect the negative terminal of the first power storage unit to the negative terminal of the second power storage unit, and
the motor-side electrical path (25) is a path configured to electrically connect the armature winding to a section of the inter-storage electrical path between the inter-storage switch and the second power storage unit, the power converter further comprising:
a motor-side switch (60) located at the motor-side electrical path.

3. The power converter according to Claim 2, further comprising:
a controller (100) configured to determine whether to set a connection state between the first power storage unit and the second power storage unit to a series connection or a motor-via connection, the motor-via connection being a state in which the positive terminal of the second power storage unit is connected to the high-potential electrical path via the motor-side electrical path, the armature winding, and the inverter, wherein
the controller is configured to:
turn on the inter-storage switch and turn off the bypass switch, on a condition that the controller determines to set the connection state between the first power storage unit and the second power storage unit to the series connection; and
turn off the inter-storage switch and turn on the bypass switch and the motor-side switch, on a condition that the controller determines to set the connection state between the first power storage unit and the second power storage unit to the motor-via connection.

4. The power converter according to Claim 2, wherein
the bypass switch is a first bypass switch (50), the power converter further comprising:
a second bypass switch (80) configured to electrically connect the positive terminal of the first power storage unit to the positive terminal of the second power storage unit.

5. The power converter according to Claim 4, comprising:
a controller (100) configured to determine whether to set a connection state between the first power storage unit and the second power storage unit to a series connection, a parallel connection, or a motor-via connection, the motor-via connection being a state in which the positive terminal of the second power storage unit is connected to the high-potential electrical path via the motor-side electrical path, the armature winding, and the inverter, wherein
the controller is configured to:
turn on the inter-storage switch and turn off the first bypass switch and the second bypass switch, on a condition that the controller determines to set the connection state between the first power storage unit and the second power storage unit to the series connection;
execute a first operation, on a condition that the controller determines to set the connection state between the first power storage unit and the second power storage unit to the parallel connection; and
execute a second operation, on a condition that the controller determines to set the connection state between the first power storage unit and the second power storage unit to the motor-via connection,
the first operation is an operation that turns off the inter-storage switch and the motor-side switch and turns on the first bypass switch and the second bypass switch,
the second operation is an operation that
turns off the inter-storage switch and the second bypass switch and turns on the first bypass switch and the motor-side switch, and
performs a switching operation of the inverter, and
the switching operation of the inverter is either
an operation that turns off the lower-arm switch in each phase of the motor and turns on the upper-arm switch in at least one phase of the motor, or
an operation that repetitively turns on and off the upper-arm switch in at least one phase of the motor, on a condition that the upper-arm switch and the lower-arm switch in a same phase of the motor are not turned on at a same time.

6. The power converter according to Claim 5, wherein
the controller is configured to:
determine to set the connection state between the first power storage unit and the second power storage unit to the parallel connection, on a condition that a potential difference between the first power storage unit and the second power storage unit is smaller than or equal to a first threshold (ΔVjde1); and
determine to set the connection state between the first power storage unit and the second power storage unit to the motor-via connection, on a condition that
the potential difference between the first power storage unit and the second power storage unit is larger than the first threshold, and
a value acquired by subtracting a voltage of the first power storage unit from a voltage of the second power storage unit is equal to or smaller than a second threshold (ΔVjde2), which is larger than the first threshold.

7. The power converter according to Claim 1, wherein
the bypass switch (51) is a switch configured to electrically connect the positive terminal of the first power storage unit to the positive terminal of the second power storage unit, and
the motor-side electrical path (25) is a path configured to electrically connect the armature winding to a section of the inter-storage electrical path between the inter-storage switch and the first power storage unit, the power converter comprising:
a motor-side switch (61) located at the motor-side electrical path.

8. The power converter according to Claim 7, further comprising:
a controller (100) configured to determine whether to set a connection state between the first power storage unit and the second power storage unit to a series connection or a motor-via connection, the motor-via connection being a state in which the negative terminal of the first power storage unit is connected to the low-potential electrical path via the motor-side electrical path, the armature winding, and the inverter, wherein
the controller is configured to:
turn on the inter-storage switch and turn off the bypass switch, on a condition that the controller determines to set the connection state between the first power storage unit and the second power storage unit to the series connection; and
turn off the inter-storage switch and turn on the bypass switch and the motor-side switch, on a condition that the controller determines to set the connection state between the first power storage unit and the second power storage unit to the motor-via connection.

9. The power converter according to Claim 1, wherein
the bypass switch is one of bypass switches including a first bypass switch (50) and a second bypass switch (80), the first bypass switch configured to electrically connect the negative terminal of the first power storage unit to the negative terminal of the second power storage unit, the second bypass switch configured to electrically connect the positive terminal of the first power storage unit to the positive terminal of the second power storage unit,
the motor-side electrical path (25) is a path configured to electrically connect the armature winding to a section of the inter-storage electrical path between the inter-storage switch and the first power storage unit, the power converter further comprising:
a motor-side switch (61) located at the motor-side electrical path.

10. The power converter according to Claim 9, further comprising:
a controller (100) configured to determine whether to set a connection state between the first power storage unit and the second power storage unit to a series connection, a parallel connection, or a motor-via connection, the motor-via connection being a state in which the negative terminal of the first power storage unit is connected to the low-potential electrical path via the motor-side electrical path, the armature winding, and the inverter, wherein
the controller is configured to:
turn on the inter-storage switch and turn off the first bypass switch and the second bypass switch, on a condition that the controller determines to set the connection state between the first power storage unit and the second power storage unit to the series connection;
execute a first operation, on a condition that the controller determines to set the connection state between the first power storage unit and the second power storage unit to the parallel connection; and
execute a second operation, on a condition that the controller determines to set the connection state between the first power storage unit and the second power storage unit to the motor-via connection,
the first operation is an operation that turns off the inter-storage switch and the motor-side switch and turns on the first bypass switch and the second bypass switch,
the second operation is an operation that
turns off the inter-storage switch and the first bypass switch and turns on the second bypass switch and the motor-side switch, and
performs a switching operation of the inverter, and
the switching operation of the inverter is either
an operation that turns off the lower-arm switch in each phase of the motor and turns on the upper-arm switch in at least one phase of the motor, or
an operation that repetitively turns on and off the upper-arm switch in at least one phase of the motor, on a condition that the upper-arm switch and the lower-arm switch in a same phase of the motor are not turned on at a same time.

11. The power converter according to Claim 10, wherein
the controller is configured to:
determine to set the connection state between the first power storage unit and the second power storage unit to the parallel connection, on a condition that a potential difference between the first power storage unit and the second power storage unit is smaller than or equal to a first threshold (ΔVjde1); and
execute the second operation to determine to set the connection state between the first power storage unit and the second power storage unit to the motor-via connection, on a condition that
the potential difference between the first power storage unit and the second power storage unit is larger than the first threshold, and
a value acquired by subtracting a voltage of the second power storage unit from a voltage of the first power storage unit is smaller than or equal to a second threshold (ΔVjde2), which is larger than the first threshold.

12. The power converter according to Claim 1, wherein
the bypass switch is one of bypass switches including a first bypass switch (50) and a second bypass switch (80), the first bypass switch configured to electrically connect the negative terminal of the first power storage unit to the negative terminal of the second power storage unit, the second bypass switch configured to electrically connect the positive terminal of the first power storage unit to the positive terminal of the second power storage unit,
the motor-side electrical path is one of motor-side electrical paths including a first motor-side electrical path (26, 27) and a second motor-side electrical path (26, 28), the first motor-side electrical path configured to electrically connect the armature winding to a section of the inter-storage electrical path between the inter-storage switch and the second power storage unit, the second motor-side electrical path configured to electrically connect the armature winding to a section of the inter-storage electrical path between the inter-storage switch and the first power storage unit, the power converter further comprising:
a first motor-side switch (60) located at the first motor-side electrical path; and
a second motor-side switch (61) located at the second motor-side electrical path.

13. The power converter according to Claim 12, further comprising:
a controller (100) configured to determine whether to set a connection state between the first power storage unit and the second power storage unit to a series connection, a parallel connection, a first motor-via connection, or a second motor-via connection, the first motor-via connection being a state in which the positive terminal of the second power storage unit is connected to the high-potential electrical path via the motor-side electrical path, the armature winding, and the inverter, the second motor-via connection being a state in which the negative terminal of the first power storage unit is connected to the low-potential electrical path via the motor-side electrical path, the armature winding and the inverter, wherein
the controller is configured to:
turn on the inter-storage switch and turn off the first bypass switch and the second bypass switch, on a condition that the controller determines to set the connection state between the first power storage unit and the second power storage unit to the series connection;
execute a first operation, on a condition that the controller determines to set the connection state between the first power storage unit and the second power storage unit to the parallel connection;
execute a second operation, on a condition that the controller determines to set the connection state between the first power storage unit and the second power storage unit to the first motor-via connection; and
execute a third operation, on a condition that the controller determines to set the connection state between the first power storage unit and the second power storage unit to the second motor-via connection,
the first operation is an operation that
turns off the inter-storage switch and at least one of the first motor-side switch or the second motor-side switch, and
turns on the first bypass switch and the second bypass switch, the second operation is an operation that
turns off the inter-storage switch, the second bypass switch, and the second motor-side switch,
turns on the first bypass switch and the first motor-side switch, and
performs a first switching operation of the inverter,
the third operation is an operation that
turns off the inter-storage switch, the first bypass switch and the first motor-side switch,
turns on the second bypass switch and the second motor-side switch, and
performs a second switching operation of the inverter,
the first switching operation of the inverter is either
an operation that turns off the lower-arm switch in each phase of the motor and turns on the upper-arm switch in at least one phase of the motor, or
an operation that repetitively turns on and off the upper-arm switch in at least one phase of the motor, on a condition that the upper-arm switch and the lower-arm switch in a same phase of the motor are not turned on at a same time, and
the second switching operation of the inverter is either
an operation that turns off the upper-arm switch in each phase of the motor and turns on the lower-arm switch in at least one phase of the motor, or
an operation that repetitively turns on and off the lower-arm switch in at least one phase of the motor, on a condition that the upper-arm switch and the lower-arm switch in a same phase of the motor are not turned on at a same time.

14. The power converter according to Claim 13, wherein
the controller is configured to:
determine to set the connection state between the first power storage unit and the second power storage unit to the parallel connection, on a condition that a potential difference between the first power storage unit and the second power storage unit is smaller than or equal to a first threshold (ΔVjde1);
determine to set the connection state between the first power storage unit and the second power storage unit to the first motor-via connection, on a condition that
the potential difference between the first power storage unit and the second power storage unit is larger than the first threshold, and
a voltage of the first power storage unit is higher than a voltage of the second power storage unit; and
determine to set the connection state between the first power storage unit and the second power storage to the second motor-via connection, on a condition that
the potential difference between the first power storage unit and the second power storage unit is larger than the first threshold, and
the voltage of the second power storage unit is higher than the voltage of the first power storage unit.

15. The power converter according to any one of Claims 3, 5, 6, 8, 10, and 11, wherein
a positive terminal of a charger (200, 210) is configured to be electrically connected to the high-potential electrical path,
a negative terminal of the charger is configured to be electrically connected to the low-potential electrical path, and
the controller is configured to:
determine to set the connection state between the first power storage unit and the second power storage unit to the series connection, on a condition that the charger connected to the high-potential electrical path and the low-potential electrical path is a high-voltage charger (200); and
determine to set the connection state between the first power storage unit and the second power storage unit to the motor-via connection, on a condition that the charger connected to the high-potential electrical path and the low-potential electrical path is a low-voltage charger (210), which has a lower charging voltage than the high-voltage charger.

16. The power converter according to Claim 13 or 14, wherein
a positive terminal of a charger (200, 210) is configured to be electrically connected to the high-potential electrical path,
a negative terminal of the charger is configured to be electrically connected to the low-potential electrical path, and
the controller is configured to:
determine to set the connection state between the first power storage unit and the second power storage unit to the series connection, on a condition that the charger connected to the high-potential electrical path and the low-potential electrical path is a high-voltage charger (200); and
determine to set the connection state between the first power storage unit and the second power storage unit to either the first motor-via connection or the second motor-via connection, on a condition that the charger connected to the high-potential electrical path and the low-potential electrical path is a low-voltage charger (210), which has a lower charging voltage than the high-voltage charger.

17. The power converter according to any one of Claims 1 to 14, further comprising:
a capacitor (90, 93A, 93B) configured to electrically connect the motor-side electrical path to a target path being at least one of the high-potential electrical path or the low-potential electrical path.

18. The power converter according to Claim 17, further comprising:
a connection switch (91-94) configured to be:
turned on to electrically connect the motor-side electrical path to the target path with the capacitor; and
turned off to cut off an electrical connection between the capacitor and at least one of the target path or the motor-side electrical path.

19. The power converter according to Claim 18, wherein
the connection switch is turned on upon determining that a current flows through the motor-side electrical path.

20. The power converter according to Claim 17, further comprising:
a smoothing capacitor (21) configured to
electrically connect the high-potential electrical path to the low-potential electrical path, and
smoothen an input voltage of the inverter; and
a series connector having a switch (SP) and a resistor (95) connected in series, wherein
the capacitor electrically connects the target path to a section of the motor-side electrical path between a motor-side switch (60) and the armature winding, and
the series connector is connected to the motor-side switch in parallel.

21. The power converter according to any one of Claims 1 to 14, further comprising:
a smoothing capacitor (21) configured to
electrically connect the high-potential electrical path to the low-potential electrical path, and
smoothen an input voltage of the inverter; and
a series connector having a switch (SP) and a resistor (95) connected in series, wherein
the series connector is connected in parallel to a motor-side switch (60) located at the motor-side electrical path.

22. A program configured to be adapted to a power converter, the power converter including:
a high-potential electrical path (22H) configured to be electrically connected to a positive terminal of a first power storage unit (31);
a low-potential electrical path (22L) configured to be electrically connected to a negative terminal of a second power storage unit (32);
an inverter (20) having
an upper-arm switch (SWH) electrically connected to the high-potential electrical path, and
a lower-arm switch (SWL) electrically connected to the low-potential electrical path;
a motor (10) having an armature winding (11) electrically connected to a connection point between the upper-arm switch and the lower-arm switch via a conductive member (23); and
a computer (101), **characterized in that**
the power converter includes:
an inter-storage switch (40) located at an inter-storage electrical path (24) that electrically connects a negative terminal of the first power storage unit to a positive terminal of the second power storage unit;
a bypass switch (50) configured to electrically connect the negative terminal of the first power storage unit to the negative terminal of the second power storage unit;
a motor-side electrical path (25) configured to electrically connect the armature winding to a section of the inter-storage electrical path between the inter-storage switch and the second power storage unit; and
a motor-side switch (60) located at the motor-side electrical path, and
the program is configured to cause the computer to:
determine whether to set a connection state between the first power storage unit and the second power storage unit to a series connection or a motor-via connection, the motor-via connection being a state in which the positive terminal of the second power storage unit is connected to the high-potential electrical path via the motor-side electrical path, the armature winding, and the inverter;
turn on the inter-storage switch and turn off the bypass switch, on a condition that the computer determines to set the connection state between the first power storage unit and the second power storage unit to the series connection; and
turn off the inter-storage switch and turn on the bypass switch and the motor-side switch, on a condition that the computer determines to set the connection state between the first power storage unit and the second power storage unit to the motor-via connection.

23. A program configured to be adapted to a power converter, the power converter including:
a high-potential electrical path (22H) configured to be electrically connected to a positive terminal of a first power storage unit (31);
a low-potential electrical path (22L) configured to be electrically connected to a negative terminal of a second power storage unit (32);
an inverter (20) having
an upper-arm switch (SWH) electrically connected to the high-potential electrical path, and
a lower-arm switch (SWL) electrically connected to the low-potential electrical path;
a motor (10) having an armature winding (11) electrically connected to a connection point between the upper-arm switch and the lower-arm switch via a conductive member (23); and
a computer (101), **characterized in that**
the power converter includes:
an inter-storage switch (40) located at an inter-storage electrical path (24) that electrically connects a negative terminal of the first power storage unit to a positive terminal of the second power storage unit;
a first bypass switch (50) configured to electrically connect the negative terminal of the first power storage unit to the negative terminal of the second power storage unit;
a second bypass switch (80) configured to electrically connect the positive terminal of the first power storage unit to the positive terminal of the second power storage unit;
a motor-side electrical path (25) configured to electrically connect the armature winding to a section of the inter-storage electrical path between the inter-storage switch and the second power storage unit; and
a motor-side switch (60) located at the motor-side electrical path,
the program is configured to cause the computer to:
determine whether to set a connection state between the first power storage unit and the second power storage unit to a series connection, a parallel connection, or a motor-via connection, the motor-via connection being a state in which the positive terminal of the second power storage unit is connected to the high-potential electrical path via the motor-side electrical path, the armature winding, and the inverter;
turn on the inter-storage switch and turn off the first bypass switch and the second bypass switch, on a condition that the computer determines to set the connection state between the first power storage unit and the second power storage unit to the series connection;
execute a first operation, on a condition that the computer determines to set the connection state between the first power storage unit and the second power storage unit to the parallel connection; and
execute a second operation, on a condition that the computer determines to set the connection state between the first power storage unit and the second power storage unit to the motor-via connection,
the first operation is an operation that turns off the inter-storage switch and the motor-side switch and turns on the first bypass switch and the second bypass switch,
the second operation is an operation that
turns off the inter-storage switch and the second bypass switch and turns on the first bypass switch and the motor-side switch, and
performs a switching operation of the inverter, and
the switching operation of the inverter is either
an operation that turns off the lower-arm switch in each phase of the motor and turns on the upper-arm switch in at least one phase of the motor, or
an operation that repetitively turns on and off the upper-arm switch in at least one phase of the motor, on a condition that the upper-arm switch and the lower-arm switch in a same phase of the motor are not turned on at a same time.

24. A program configured to be adapted to a power converter, the power converter including:
a high-potential electrical path (22H) configured to be electrically connected to a positive terminal of a first power storage unit (31);
a low-potential electrical path (22L) configured to be electrically connected to a negative terminal of a second power storage unit (32);
an inverter (20) having
an upper-arm switch (SWH) electrically connected to the high-potential electrical path, and
a lower-arm switch (SWL) electrically connected to the low-potential electrical path;
a motor (10) having an armature winding (11) electrically connected to a connection point between the upper-arm switch and the lower-arm switch via a conductive member (23); and
a computer (101), **characterized in that**
the power converter includes:
an inter-storage switch (40) located at an inter-storage electrical path (24) that electrically connects a negative terminal of the first power storage unit to a positive terminal of the second power storage unit;
a bypass switch (51) configured to electrically connect the positive terminal of the first power storage unit to the positive terminal of the second power storage unit;
a motor-side electrical path (25) configured to electrically connect the armature winding to a section of the inter-storage electrical path between the inter-storage switch and the first power storage unit; and
a motor-side switch (61) located at the motor-side electrical path, and
the program is configured to cause the computer to:
determine whether to set a connection state between the first power storage unit and the second power storage unit to a series connection or a motor-via connection, the motor-via connection being a state in which the negative terminal of the first power storage unit is connected to the low-potential electrical path via the motor-side electrical path, the armature winding, and the inverter;
turn on the inter-storage switch and turn off the bypass switch, on a condition that the computer determines to set the connection state between the first power storage unit and the second power storage unit to the series connection; and
turn off the inter-storage switch and turn on the bypass switch and the motor-side switch, on a condition that the computer determines to set the connection state between the first power storage unit and the second power storage unit to the motor-via connection.

25. A program configured to be adapted to a power converter, the power converter including:
a high-potential electrical path (22H) configured to be electrically connected to a positive terminal of a first power storage unit (31);
a low-potential electrical path (22L) configured to be electrically connected to a negative terminal of a second power storage unit (32);
an inverter (20) having
an upper-arm switch (SWH) electrically connected to the high-potential electrical path, and
a lower-arm switch (SWL) electrically connected to the low-potential electrical path;
a motor (10) having an armature winding (11) electrically connected to a connection point between the upper-arm switch and the lower-arm switch via a conductive member (23); and
a computer (101), **characterized in that**
the power converter includes:
an inter-storage switch (40) located at an inter-storage electrical path (24) that electrically connects a negative terminal of the first power storage unit to a positive terminal of the second power storage unit;
a first bypass switch (50) configured to electrically connect the negative terminal of the first power storage unit to the negative terminal of the second power storage unit;
a second bypass switch (80) configured to electrically connect the positive terminal of the first power storage unit to the positive terminal of the second power storage unit;
a motor-side electrical path (25) configured to electrically connect the armature winding to a section of the inter-storage electrical path between the inter-storage switch and the first power storage unit; and
a motor-side switch (61) located at the motor-side electrical path,
the program is configured to cause the computer to:
determine whether to set a connection state between the first power storage unit and the second power storage unit to a series connection, a parallel connection, or a motor-via connection, the motor-via connection being a state in which the negative terminal of the first power storage unit is connected to the low-potential electrical path via the motor-side electrical path, the armature winding, and the inverter;
turn on the inter-storage switch and turn off the first bypass switch and the second bypass switch, on a condition that the computer determines to set the connection state between the first power storage unit and the second power storage unit to the series connection;
execute a first operation, on a condition that the computer determines to set the connection state between the first power storage unit and the second power storage unit to the parallel connection; and
execute a second operation, on a condition that the computer determines to set the connection state between the first power storage unit and the second power storage unit to the motor-via connection,
the first operation is an operation that turns off the inter-storage switch and the motor-side switch and turns on the first bypass switch and the second bypass switch,
the second operation is an operation that
turns off the inter-storage switch and the first bypass switch and turns on the second bypass switch and the motor-side switch, and
performs a switching operation of the inverter, and
the switching operation of the inverter is either
an operation that turns off the lower-arm switch in each phase of the motor and turns on the upper-arm switch in at least one phase of the motor, or
an operation that repetitively turns on and off the upper-arm switch in at least one phase of the motor, on a condition that the upper-arm switch and the lower-arm switch in a same phase of the motor are not turned on at a same time.

26. A program configured to be adapted to a power converter, the power converter including:
a high-potential electrical path (22H) configured to be electrically connected to a positive terminal of a first power storage unit (31);
a low-potential electrical path (22L) configured to be electrically connected to a negative terminal of a second power storage unit (32);
an inverter (20) having
an upper-arm switch (SWH) electrically connected to the high-potential electrical path, and
a lower-arm switch (SWL) electrically connected to the low-potential electrical path;
a motor (10) having an armature winding (11) electrically connected to a connection point between the upper-arm switch and the lower-arm switch via a conductive member (23); and
a computer (101), **characterized in that**
the power converter includes:
an inter-storage switch (40) located at an inter-storage electrical path (24) that electrically connects a negative terminal of the first power storage unit to a positive terminal of the second power storage unit;
a first bypass switch (50) configured to electrically connect the negative terminal of the first power storage unit to the negative terminal of the second power storage unit;
a second bypass switch (80) configured to electrically connect the positive terminal of the first power storage unit to the positive terminal of the second power storage unit;
a first motor-side electrical path (26, 27) configured to electrically connect the armature winding to a section of the inter-storage electrical path between the inter-storage switch and the second power storage unit;
a second motor-side electrical path (26, 28) configured to electrically connect the armature winding to a section of the inter-storage electrical path between the inter-storage switch and the first power storage unit;
a first motor-side switch (60) located at the first motor-side electrical path; and
a second motor-side switch (61) located at the second motor-side electrical path,
the program is configured to cause the computer to:
determine whether to set a connection state between the first power storage unit and the second power storage unit to a series connection, a parallel connection, a first motor-via connection, or a second motor-via connection, the first motor-via connection being a state in which the positive terminal of the second power storage unit is connected to the high-potential electrical path via the motor-side electrical path, the armature winding, and the inverter, the second motor-via connection being a state in which the negative terminal of the first power storage unit is connected to the low-potential electrical path via the motor-side electrical path, the armature winding, and the inverter;
turn on the inter-storage switch and turn off the first bypass switch and the second bypass switch, on a condition that the computer determines to set the connection state between the first power storage unit and the second power storage unit to the series connection;
execute a first operation, on a condition that the computer determines to set the connection state between the first power storage unit and the second power storage unit to the parallel connection;
execute a second operation, on a condition that the computer determines to set the connection state between the first power storage unit and the second power storage unit to the first motor-via connection; and
execute a third operation, on a condition that the computer determines to set the connection state between the first power storage unit and the second power storage unit to the second motor-via connection,
the first operation is an operation that
turns off the inter-storage switch and at least one of the first motor-side switch or the second motor-side switch, and
turns on the first bypass switch and the second bypass switch, the second operation is an operation that
turns off the inter-storage switch, the second bypass switch, and the second motor-side switch,
turns on the first bypass switch and the first motor-side switch, and
performs a first switching operation of the inverter,
the third operation is an operation that
turns off the inter-storage switch, the first bypass switch, and the first motor-side switch,
turns on the second bypass switch and the second motor-side switch, and
performs a second switching operation of the inverter,
the first switching operation of the inverter is either
an operation that turns off the lower-arm switch in each phase of the motor and turns on the upper-arm switch in at least one phase of the motor, or
an operation that repetitively turns on and off the upper-arm switch in at least one phase of the motor, on a condition that the upper-arm switch and the lower-arm switch in a same phase of the motor are not turned on at a same time, and
the second switching operation of the inverter is either
an operation that turns off the upper-arm switch in each phase of the motor and turns on the lower-arm switch in at least one phase of the motor, or
an operation that repetitively turns on and off the lower-arm switch in at least one phase of the motor, on a condition that the upper-arm switch and the lower-arm switch in a same phase of the motor are not turned on at a same time.
